# EUROPÄISCHE PATENTSCHRIFT

(11) **EP 3 616 029 B1**
(45) Veröffentlichungstag und Bekanntmachung des Hinweises auf die Patenterteilung: **30.11.2022**
(21) Anmeldenummer: 18721279.0
(22) Anmeldetag: 27.04.2018
(51) Int. Cl.: G06F 3/01, G09B 21/00

(54) **TAKTILES DISPLAY MIT MAGNETISCH BISTABILEN AXIALSYMMETRISCHEN LINEAR-AKTUATOR MIT POLKONTUR UND SCHALTMATRIX UND OPTISCH-TAKTILE SEHHILFE HIERMIT**
TACTILE DISPLAY HAVING A MAGNETICALLY BISTABLE AXIALLY SYMMETRICAL LINEAR ACTUATOR HAVING A POLE CONTOUR AND SWITCHING MATRIX, AND OPTICAL-TACTILE SEEING AID HAVING SAME
AFFICHAGE TACTILE À ACTIONNEUR LINÉAIRE AXISYMÉTRIQUE MAGNÉTIQUE BISTABLE POURVU DE CONTOUR DE PÔLE ET MATRICE DE COMMUTATION ET AIDE VISUELLE OPTIQUE TACTILE CORRESPONDANTE

(30) Priorität: 29.04.2017 DE 102017004105
(43) Veröffentlichungstag der Anmeldung: 04.03.2020
(73) Patentinhaber: Greiner, Luitpold, 96050 Bamberg (DE)
(72) Erfinder: Greiner, Luitpold, 96050 Bamberg (DE)
(74) Vertreter: Dreykorn-Lindner, Werner
(86) Internationale Anmeldenummer: PCT/EP2018/025133
(87) Internationale Veröffentlichungsnummer: WO 2018/197052

(56) Entgegenhaltungen:
- AT-U1- 6 515
- US-A- 5 466 154

## Beschreibung

Die Erfindung betrifft, gemäß dem Oberbegriff des Patentanspruchs 1, ein taktiles Display. Weiterhin betrifft die Erfindung, gemäß Patentanspruch 14, eine Verwendung eines taktilen Displays für eine intuitiv nutzbare optisch-taktile Sehhilfe zur Substitution des menschlichen Seh-Sinns. Schließlich betrifft Patentanspruch 15 ein System aus optisch-taktiler Sehhilfe und einem taktilen Display.

Taktile Displays (Braille-Zeilen) zur Ausgabe der Daten von Computern (PCs) für sehbehinderte Menschen sind seit langem bekannt. Mit der Einführung von grafischen Bedienoberflächen (z.B. "Windows"- Betriebssystem) an PCs und mit der wachsenden Verbreitung von Bildschirm-orientierten Betriebssystemen und grafischer Benutzer-Software wird seitens der Sehbehinderten der Ruf nach neuartigen Grafik-Displays auf taktiler Basis laut. Man stellt sich hier z.B. eine Matrix von 200x400 taktilen Stiften auf einer Abtastfläche vergleichbar mit DIN A4 vor. Somit muss eine flächenmäßig dichte Aneinanderreihung der zum Stiftantrieb erforderlichen Aktuatoren möglich sein. Gerade im Hinblick auf die wachsende Zahl mobiler IT-Geräte (Notebooks, Laptops, Smart- phones oder intelligente Uhren) ist zudem besonderer Augenmerk auf möglichst geringe Bauhöhe der Display-Einheit, bei gleichzeitig minimalem Energiebedarf zu richten. Insbesondere entsteht die Notwendigkeit, auch großflächige taktile AnzeigeVorrichtungen mit einer großen Anzahl von Einzelstiften (z.B. 200 x 400) bereitzustellen. Speziell für die reine Grafik-Ausgabe wünscht man zusätzlich Stift-Abstände von maximal 2.0mm. Im Vergleich zu den Braille-Zellen zur Schrift-Symboldarstellung (8 Stifte, Abstand = 2.5mm pro Symbol, zusätzlicher lateraler Raum zwischen den einzelnen Symbolen) stellt dies eine deutlich höhere Anforderung dar.

Auf Grund der komplexen Randbedingungen bei der Nutzung taktiler braille-Zeilen haben sich Piezo-Antriebe für die Stifte am Markt durchgesetzt. Die in der Regel als Biege-Elemente arbeitenden, sehr teuren keramischen Aktuatoren erfordern allerdings zusätzliche mechanische Kraftumlenkungen, um eine senkrecht zur Abtastfläche verlaufende Stiftbewegung überhaupt zu realisieren. Im Zusammenspiel mit der zur Aktuator-Ansteuerung benötigten Hochspannung ergibt sich bis heute speziell in Hinsicht auf Flächendisplays ein enorm hohes Preisniveau. Jüngste Schätzungen für den Preis eines taktilen Flächendisplays (7600 Stifte) kommen in die Größenordnung des Jahreslohns eines sehr gut verdienenden Angestellten.

Die mechanischen, elektrischen und preislichen Nachteile der etablierten Piezomodule führten auch dazu, dass bis heute für Blinde keine "Barrierefreiheit" im gesamten Selbstbedienungsbereich gegeben ist. Seien es Fahrkartenautomaten mit grafischer Streckendarstellung, Getränkeautomaten oder Geld/ Bank- Automaten: der Blinde hat keine Chance, diese Geräte diskret zu nutzen, weil in der Regel schlicht kein für ihn geeignetes taktiles Ausgabemedium eingebaut ist.

Im Zusammenhang mit den benötigten Mindestkräften (z.B.: 0.3N) für einen zuverlässigen Abtastvorgang durch den fühlenden Finger sind kleine Stiftabstände ein grundsätzliches Problem, da bei allen Axial-Aktor - Typen in der Umgebung des taktilen Stifts eine ausreichende Menge von Funktions- Material - hier z.B. beim magnetischen Aktuator vor allem eine Spule mit einer hohen Anzahl von Draht-Windungen - angebracht werden muss. Die simple AneinanderReihung von allen axialen Aktuatoren des taktilen Displays in einer Ebene (parallel zur Ebene der Taststifte) ist deshalb aus räumlichen Gründen nicht möglich.

Das Problem enger Rasterung trifft natürlich auch auf die meist elektrische Ansteuerung der Aktuatoren zu. Gerade bei Piezo-Anwendungen ist dies besonders kritisch, da elektrische Hochspannungs-Module eingesetzt werden. Letztlich ist bei allen Aktuator- Typen eine beträchtliche Fläche für die Unterbringung der in der Regel integrierten Schaltkreise (IC's) bereitzustellen. Dies wird meist durch seitliche Anbringung der IC's neben der Aktuatorfläche gelöst, macht also das Display insgesamt weniger kompakt.

Auf Grund der heutigen Marktsituation bei taktilen Displays kann die folgende Betrachtung mit dem Schwerpunkt auf Piezo-keramischen Aktuatoren geführt werden. Diese Technologie repräsentiert derzeit noch den Stand der Technik auf diesem Gebiet, wie z.B. eine Vor-Studie zum "HyperBraille" - Projekt (Bericht des Bundesministeriums für Wirtschaft und Technologie, 10115 Berlin, April 2010, www.bmwi.de) aufzeigt.

Für großflächige Displays müssen die Aktuatoren sehr eng aneinander gereiht werden. So ergibt sich hier bei Piezo-Lösungen eine beträchtliche Bauhöhe durch z.B. komplizierte Stapeltechniken von mehreren Platinen, was dazu führt, dass insbesondere für mobile Anwendungen die Piezotechnik wenig attraktiv ist - nicht zuletzt wegen Sicherheitsaspekten im Zusammenhang mit der benötigten elektrischen Hochspannung (> 100V) zur Ansteuerung der eigentlichen Biege-Elemente.

Vor allem ist bei jeder Piezo-Lösung nachteilig, dass mindestens eine stabile Stift-Position ("oben" oder "unten") nur durch permanente elektrische Ansteuerung zu realisieren ist. Im energiesparenden "Aus-Zustand" des gesamten Displays ist somit keine gültige Anzeige der Daten gewährleistet.

Die Mehrzahl der taktilen Displays verwendet Piezo-Aktuatoren, verbunden mit all ihren resultierenden Nachteilen ( hoher Preis, große Bauhöhen, permanente elektrische Hochspannung, mechanische Zusatz-Vorrichtungen zur Kraftübertragung), wie z.B. in DE 103 49 100 A1 für ein 10-stiftes Flächenmodul beschrieben. Die Problematik von Piezo-Aktuatoren beim Einsatz in Flächendisplays, insbesondere die mechanischen und elektrischen Anforderungen werden bei der DE 103 49 100 A1 durch aufwändige Stapelverfahren einer Vielzahl von Einzelplatinen gelöst. Beim Einsatz im Zusammenhang mit taktilen Stiften ist für den Aktuator gefordert, dass die jeweilige "oben" und "unten" - Position klar definiert sind und eine genügende Haltekraft (z.B. 400 mN) bereitgestellt wird. Bei DE 103 49 100 A1 wird ebenfalls eine Piezo-Flächen-Lösung angeboten, allerdings zeigt der Einsatz zusätzlicher mechanischer Elemente ( Kniehebel-Getriebe) wiederum die grundsätzliche Schwierigkeit, einen eindeutigen, klar tastbaren "oben" oder "unten" Zustand des Stifts zu gewährleisten.. Allein die Vorrichtung der mechanischen Kraftübertragung nimmt geometrisch erheblichen Raum ein, die räumliche Unterbringung der Ansteuer-IC's und Steckverbinder zu einem Bus-System treiben die Bauhöhe in senkrechter Richtung nochmals nach oben.

DE 10 2010 005 933 A1 zeigt ebenfalls diese Problematik auf: hier wird neben der Verwendung eines Keilgetriebes bei der Rückstellung der Stifte sogar auf die Schwerkraft vertraut, was vor dem Hintergrund von mobilen Anwendungen mit Problemen in Hinsicht auf die Korrektheit der Datenanzeige behaftet ist.

US 2010/0085168 A1 stellt eine flächige Anordnung von linearen Aktuatoren, d.h. eine flächige Anordnung von Piezo-Einzelelementen parallel zur Stiftebene vor, bezieht sich jedoch ausdrücklich auf lineare Piezo-Aktuatoren, wobei völlig offen gelassen wird, wie der doch recht beträchtliche notwendige taktile Hub von ca. 0.7 mm technisch realisiert werden kann. Die Schwierigkeit, kleine Stiftabstände (unter 2.5mm) zu erhalten wird bereits aus der dortigen Darstellung (1) klar. In der US 2010/0085168 A1 wird an keiner Stelle darauf eingegangen, wie die geforderten Mindestkräfte im Zusammenhang mit der Dimensionierung der Piezo-Bauteile erreicht werden können.

In DE 10 2007 022 056 A1 wird unter realistischen Bedingungen (bezüglich Kräften und räumlicher Dimension der Piezo - Aktuatoren) versucht, ein Flächendisplay zu ermöglichen. Es ist eine Vielzahl von Platinen erforderlich, bei denen allerdings nur ein Randbereich genutzt wird, um die Piezo-Aktuatoren aufzunehmen. Die Montage des Gesamt-Displays ist aufwändig und resultiert in einer z.B. für mobile Anwendungen nicht akzeptablen Bauhöhe des Gerätes.

Ein mit magnetischen Aktuatoren versehenes Flächendisplay, insbesondere einen Display-Ansätze für mobile Lösungen zeigt DE 198 27 666 A1, wo zwar neben Piezo-Aktuatoren auch elektromagnetische Aktuatoren erwähnt werden, jedoch erfolgt hier die Ansteuerung der Stifte nur zeilenweise, durch einen zusätzlichen, mechanisch zu verschiebenden Steuerwagen. Die dargestellte magnetische Version beinhaltet zudem eine Vielzahl von zusätzlichen mechanischen Rast- und Hebel- Vorrichtungen. Demgemäß wird hier das Problem des hohen Platzbedarfs der Ansteuer-Spulen gelöst, indem die magnetischen Aktuatoren von dem mechanisch zu bewegenden Steuerwagen aus die Stifte nur zeilenweise auf die "oben" oder "unten" Position stellen. Eine schnelle elektrische Einzel-Adressierung der Stifte - wie für grafische PC-Anwendungen unbedingt erforderlich - ist hier keinesfalls gegeben.

Ein prinzipiell ähnliches Vorgehen wird in DE 10 2014 011 326 A1 beschrieben. Auch hier sind die Positionen eines taktilen Flächendisplays nicht einzeln adressierbar und es ist eine Fülle von mechanischen Führungs- Halte- und Umsetz - Elementen zur Realisierung einer stabilen oben / unten Position der taktilen Stifte vorgesehen. In der Beschreibung wird auch die bisher ungelöste Problematik gerade des Einsatzes von Elektromagneten im taktilen Umfeld (typ. Raster ca. 2,5mm) betont. Für ein kompaktes - vielleicht sogar mobiles - taktiles Flächen-Anzeigegerät ist die vorgestellte Lösung auf jeden Fall ebenfalls nicht geeignet.

Im US Patent 4,259,653 A1 wird ein bistabiler linearer Aktuator mit Permanent-Magneten vorgestellt. Jedoch ist die gerade bei taktilen Anwendungen wichtige "oben-Position" hier die am wenigsten stabile (geringste Kraft des Systems) und bei Strom-Abschaltung der Spule fällt das System sofort in die "unten-Position", womit vor allem eine zuverlässige Darstellung der Daten im elektrischen "Aus-Zustand" des Displays nicht mehr möglich ist.

Auch eine in der US 4 831 372 A beschriebene magnetisch betätigte Informationsanzeigevorrichtung arbeitet im Prinzip elektromagnetisch bistabil, hier werden jedoch keinerlei Kräfte nach außen übertragen, es wird lediglich im Inneren einer geschlossenen optischen Display-Zelle eine Zwischenwand verschoben. Auch hier ist eine Fülle von zusätzlichen Führungs- und Endanschlags - Elementen erforderlich. Im Einzelnen umfasst die Informationsanzeigevorrichtung ein starres, permanent magnetisiertes Anzeigesegment, das beweglich in einer nichtmagnetischen Kammer mit einem transparenten Sichtfenster montiert ist und ein opakes Fluid enthält, dessen Farbe mit der Farbe der Anzeigevorrichtung kontrastiert. Ein an der Rückseite der Kammer befestigter Kern ist in der Lage, selektiv magnetisiert zu werden, um das Anzeigesegment entsprechend der ausgewählten magnetischen Polarität des Kerns abzustoßen oder anzuziehen. Die Abstoßung des Anzeigesegments durch den Kern bewirkt, dass sich das Anzeigesegment in Richtung des transparenten Fensters bewegt, durch das die Farbe des Anzeigesegments betrachtet werden kann, wenn das opake Fluid von dem transparenten Fenster weg verschoben wird. Die Anziehung des Anzeigesegments durch den Kern bewirkt, dass sich das Anzeigesegment von dem transparenten Fenster weg bewegt, wodurch ermöglicht wird, dass das opake Fluid die Betrachtung des Anzeigesegments beeinträchtigt. In dieser Position wird die Farbe der opaken Flüssigkeit durch das transparente Fenster betrachtet. Die Bistabilität der magnetisch betätigte Informationsanzeigevorrichtung wird durch den Restmagnetismus im Kern erreicht, der auf das permanent magnetisierte Anzeigesegment wirkt. Dabei wird die Dauer und die Größe der Energie minimiert, die angewendet werden muss, um eine Änderung in der Anzeige von Information einzuleiten Eine Vielzahl von Anzeigevorrichtungen kann in einem Array kombiniert werden, um ein Anzeigefeld mit einer verbesserten Auflösung des angezeigten Bildes zu bilden.

Magnetische Linerar-Aktuatoren werden auch in US 3,755,766 und US 4,072,918 beschrieben. Die Problematik der stabilen Endlage wird hier durch zusätzliche Federsysteme gelöst. Allerdings hindern gerade diese Federn das System an einer schnellen Reaktion auf Steuersignale (Gegenrichtung), schwächen die "oben-Haltekraft" und machen den Aufbau zusätzlich kompliziert. Zur Behandlung der Kräfte-Problematik sind zudem weichmagnetische Fluß-Leitvorrichtungen erforderlich, wodurch der Aktuator weder kompakt noch preiswert zu fertigen ist.

Speziell für die mobile taktile Anzeige in braille-Symbolen wird in EP 0925570 B1 ein Mikro-Elektromagnet beschrieben. Auch hier ist kennzeichnend, dass für mindestens eine End-Position der Spule permanent Energie zugeführt werden muss, und zudem für die Rückstellung Blattfedern und O-Ringe eingesetzt werden.

In US 5,466,154 A wird bei einer Braille Platte mit beweglichen Punktstiften die Problematik von Dauer-Bestromung und erreichbaren taktilen Kräften (hier lediglich 50 mN) bei bisherigen elektromagnetischen Lösungen signifikant aufgezeigt. Bei der dort vorgestellten Lösung der Braille Platte mit einem Mikroprozessor und mit einer Vielzahl von Festkörper-Schaltchips, wobei zur Übersetzung der alphanumerische Informationen jedes der Stellglieder unter der Steuerung des Mikroprozessors und eines Chip-Controller selektiv betätigt wird, wird entweder ein hartmagnetischer Stab mittels Luftspulen bewegt oder es wird eine Luftspule mit Feldverstärkendem Eisenkern, also ganz normales "Leiteisen" ohne weitere magnetische Spezifikation verwendet. Bei der "oben - Position" ist also permanente Bestromung gefordert so dass bei der Bestromung mit 10 mA dabei eine maximale Kraft von 50 mN erreicht wird. Geht man bei taktilen Flächendisplays von 10.000 Pins aus, von denen dann im Mittel 5.000 Stück permanent bestromt werden müssten, kommt man selbst für diese geringe Kraft von 50mN auf einen Strombedarf von 50 A. Dies erklärt u.a., warum der Einsatz von Piezo-Technologie den Stand der Technik definiert.

DE 102 60 668 A1 hat einen Teller-förmigen Anker, benutzt aber ebenso zusätzliche Federn um die "oben" -Stellung zu realisieren.

In DE 102 34 863 A1 wird ein elektromagnetischer Taster mit taktiler Rückmeldung beschrieben. Hier für Bewegung und Endlagen-Fixierung des hartmagnetischen Innenkerns neben der Dauer-Bestromung der Spule ebenso ein zusätzliches Federelement erforderlich.

Der primäre Ansatz von EP 1 681 687 B1 ist die hochkomplexe Entwicklung, Herstellung und Einsatz von magnetischen Komposit-Materialien zur Optimierung von äußerem Feldverlauf in Abhängigkeit von der mikro/ nano - magnetischen Strukur dieser neuen Materialien. Trotz dieses erheblichen erfinderischen Aufwandes - dessen kostenmäßige Folgen noch gar nicht erfassbar sind - zeigt die vorgestellte Ausführungsform einer bistabilen linearen Aktuator-Einheit mit zwei hartmagnetischen Materialien unterschiedlicher Koerzitivität für den speziellen Fall einer "braille-Anwendung" die vom Stand der Technik her bekannten Nachteile: Es werden dabei ( mindestens) zwei bewegliche hartmagnetische Körper hintereinander angeordnet. Die "oben" und "unten" - Positionen sind hier nicht klar definiert, was beim erklärten Fokus der Vorrichtung auf federungs-technische Applikationen keine wichtige Rolle spielt, für taktile Anwendungen aber essentiell nachteilig ist. Zudem wird klar gezeigt, dass zur Aufrechterhaltung der "oben" Position konstruktionsbedingt ein permanenter Stromfluss durch die zusätzlich mitbewegte Erreger-Spule benötigt wird.

Sämtlichen vorgestellten elektromagnetischen Lösungen ist gemeinsam, dass keinerlei Angaben zur geometrischen Gestaltung der Pol-Formen ( z.B. Konturen oder Seitenverhältnisse ) gemacht werden, die auf die speziellen Erfordernisse bei taktilen Flächen-Displays eingehen. Darüber hinaus werden auch Lösungen über "Memory-Metalle" diskutiert (siehe hierzu z.B. Haga, Makishi et. al, in Sensors and Actuators A, Vol. 119, 13. April 2005, S. 316-322). Das zeitliche Ansprechverhalten dieser Konfigurationen genügt jedoch nicht den Ansprüchen einer schnellen Addres sierbarkeit.

Für eng angeordete taktile Stifte in braille-Schrift-Displays und grafischen Flächendisplays soll eine mechanisch- konstruktiv einfache und preiswerte bistabile elektromagnetische lineare Antriebseinheit bereitgestellt werden, bei der die "oben" und "unten" - Position mechanisch eindeutig definiert ist. Dies soll ohne zusätzliche Halte-, Hebel- und Dämpfungs-Vorrichtungen geschehen und eine geringe Bauhöhe des späteren Gesamt-Displays ermöglichen. Insbesondere Haltekraft und Halteposition der "oben"- Position sollen den taktilen Anforderungen entsprechend durch einfache konstruktive Maßnahmen einstellbar sein. Vor allem im Hinblick auf mobile Anwendungen soll der Aktuator besonders energiesparend sein und selbst im elektrischen "Aus-Zustand" des Gesamtgerätes die korrekte Darstellung der letzten Computerdaten beibehalten. Für die großflächige Darstellung grafischer Inhalte muss die unbegrenzte enge (= Raster-Abstand kleiner oder gleich 2,5mm) flächige Aneinanderreihung der Einzel-Aktuatoren gewährleistet sein. Störungen und Kopplungen zwischen den einzelnen Aktuatoren müssen minimiert werden.

Die triviale Randbedingung eines derartigen Computer-Displays ist hierbei natürlich die schnelle Einzeladressier-Möglichkeit (ähnlich wie in einem "Random Access Memory") der taktilen Stifte. Weiterhin soll dabei ermöglicht werden, eine Vielzahl senkrecht zu bewegender Stifte großflächig in einem vorgegebenen engen Raster-Abstand so zu positionieren, dass trotz einer das eigentliche Stift-Rastermaß deutlich übersteigenden lateralen Dimension der- einzelnen Antriebseinheit der gewünschte enge Rasterabstand der Stifte realisiert werden kann. Die mechanische Kraftübertragung und elektrische Versorgung der Aktuatoren muss dabei mit minimaler Bauhöhe des Displays realisiert werden.

Mit der wachsenden Verbreitung von Bildschirm-orientierten Betriebssystemen und grafischer Benutzer-Software entsteht die Notwendigkeit, auch großflächige taktile Anzeige-Vorrichtungen mit einer großen Anzahl von Einzelstiften (z.B. 200 x 400) bereitzustellen. Gerade aufgrund der hohen Zahl von Einzelstiften ist deshalb die einwandfreie Funktion des einzelnen taktilen Stifts über einen langen Benutzungs-Zeitraum Voraussetzung, um die einwandfreie Funktion des Displays als Ganzem zu garantieren. So entstehen - allein schon aus Sicht der Fehlerstatistik - deutlich gesteigerte Anforderungen bezüglich der Zuverlässigkeit der Funktion des Einzelstifts.

Mangelnde Robustheit und kurze Service-Intervalle sind auch ein wesentlicher Grund, warum bisherige taktile Displays im öffentlichen Raum kaum Eingang gefunden haben. So ist bis heute für Blinde praktisch keine ,Barrierefreiheit" z. B. im gesamten Selbstbedienungsbereich gegeben: seien es Fahrkartenautomaten, Getränkeautomaten oder Geld/ Bank- Automaten: der Blinde hat keine Chance, diese Geräte diskret zu nutzen, weil in der Regel schlicht keine für ihn geeignete Leseeinheit eingebaut ist.

Völlig unabhängig vom eingesetzten Aktuator-Typ steht für den Endnutzer die leichte Lesbarkeit der Anzeige - das bedeutet möglichst hohe Mindest-Stellkräfte (wie z.B. 0.3N) für einen zuverlässigen Abtastvorgang durch den fühlenden Finger - und vor allem die Zuverlässigkeit des Gesamt-Geräts im Vordergrund. Die Hauptquelle von Störungen sind jedoch Verschmutzungen, die allein aus dem Wesen des taktilen Vorganges beim Lesen oder bei der Eingabe entspringen: Fett, Hautpartikel, Haare und Schweiß werden direkt durch den das Display nutzenden Menschen eingebracht. Staub, Feuchtigkeit und durch Versehen herbeigeführte Benetzung des Displays mit Flüssigkeit tun ihr Übriges dazu, früher oder später den Service-Fall herbeizuführen.

Ein Weg äußere Einflüsse zu minimieren wird durch das Auflegen von Folien auf die taktile Tastfläche beschritten, wie in DE 101 27 039 B4 beschrieben. Nachteilig ist hier, dass die Erhabenheit der Taststifte gegenüber der Display-Ebene weniger deutlich ausgeprägt ist, das Lesen der taktilen Information also beschwerlicher und weniger zuverlässig abläuft. Aus diesem Grund haben sich Display-Abdeckungen in der Praxis nicht durchgesetzt.

Die Alternative zur Abdeckung der Display-Oberseite ist die Abdichtung des einzelnen Stifts in seiner Führung, wie z.B. in DE 103 06 230 B4 beschrieben. Gerade im Zusammenhang mit den meist geringen Stellkräften der Aktuatoren ist dieses Verfahren grundsätzlich kritisch zu sehen. Zudem macht es den Aufbau der Einheit komplizierter, und an einen einfachen Ausbau des Einzelstifts - im Idealfall durch den sehbehinderten Endnutzer selbst - ist bei der gezeigten Ausführungsform nicht zu denken.

Um ein Verschmutzungs-Problem im Stift-Bereich beheben zu können, muss der Endnutzer in der Regel das gesamte taktile Display zur Reinigung an den Hersteller einsenden. DE 37 06 286 A1 schlägt deshalb ein Display mit komplett auswechselbarer Lesestift - Einheit vor, die vom Piezo-Aktuator- Teil als Ganzes trennbar ist. Auf diese Weise kann im Servicefall der Aktuator-Teil beim Endnutzer verbleiben, der dann allerdings nur mittels einer extra zu kaufenden kompletten Reserve-Stifteinheit in der Lage ist, weiter mit dem Display arbeiten zu können. Nachteilig ist hier, dass bereits bei Fehlfunktion von nur einem einzigen Stift die gesamte Stifteinheit ausgebaut werden muss, weil die Stifte selbst in ihrer Einheit ausdrücklich unverlierbar - also gerade nicht einfach durch den Endnutzer selbst demontierbar- eingebaut sind, und der Kauf der Reserve-Stifteinheit natürlich zusätzliche Kosten verursacht. Um sowohl die Kraft-Kopplung zwischen den Aktuatoren und den eigentlichen taktilen Stiften zu gewährleisten, als auch das Auswechseln der kompletten Stift-Einheit zu ermöglichen werden hier an den Unterseiten der Lesestifte Haftmagnete angebracht, die mit dem ferro-magnetischem Material auf den freien Enden der Aktivatoren zusammenwirken. Neben zusätzlichem Materialaufwand und komplexen feinwerktechnischen Montagearbeiten in der Fertigung des Displays ist bei dieser speziellen Anordnung des magnetischen Materials hier dynamische Belastung des Aktuator/Stift -Systems durch die erhöhte Gesamtmasse des Hartmagneten kritisch zu sehen. Zudem kommt gerade die Eigenschaft der mechanischen Passungs-Herstellung durch die Verbindung bei dieser Anordnung von hartmagnetischem und weichmagnetischen Material nämlich nicht zum Tragen, weil durch die beschriebene flächige Ausgestaltung des Magnets am Stiftende bei ungenauer mechanischer Passung zusätzliche Querkräfte auftreten können, die sowohl den Stift als auch den Aktuator in der freien senkrechten Bewegung behindern. Folgerichtig wird in den nachgeordneten Unteransprüchen auch auf die Notwendigkeit von zusätzlichen Schnäppern für die Gewährleistung der Passfunktion zwischen Modulkörper und Lesestifteinheit in ihrer Gesamtheit hingewiesen. Dadurch wird auch klar, dass erheblicher Aufwand für die mechanische Präzision (Toleranz-Problem) der beiden komplexen Teile nötig sein wird. Die dargestellte magnetische Kopplung mit einem flächigen Permanentmagneten am Stiftende erfüllt ohne zusätzliche mechanische Vorrichtungen also keinesfalls die Aufgabe, den individuellen Einzelstift zuverlässig ohne Einprägung von Querkräften zu justieren.

Für taktile Stifte soll eine einfache und preiswerte Möglichkeit geschaffen werden, die negativen Folgen der allgegenwärtigen Verschmutzungsquellen für die einwandfreie Funktion des Einzelstifts zu minimieren, ohne dass durch diese Maßnahme die taktile Qualität des Displays beeinträchtigt wird. Dabei soll im Servicefall jeder Einzelstift leicht zu entfernen / zu reinigen und problemlos wieder einsetzbar sein, und dies möglichst selbst durch einen ungeschickten, sehbehinderten Endnutzer.

Die kongruente Übertragung des Umganges mit grafischer Bedienoberfläche auf den Nutzungsbereich sehbehinderter Menschen am PC verlangt aber zusätzlich auch die interaktive, intuitive Nutzbarkeit des taktilen Displays als Eingabe-Einheit, also eine bidirektionale Betriebsweise. Beim Gegenstand der bereits weiter oben gewürdigten DE 103 49 100 A1 müssen zur elektrischen Ansteuerung die Einzelplatinen noch zusätzlich untereinander verdrahtet werden. Im Gesamtgerät arbeitet die beschriebene Aktuator-Anordnung zudem ausschließlich passiv als Anzeigevorrichtung. Um auch Eingaben zur Steuerung des Gesamtgeräts realisieren zu können sind weitere Betätigungs-Schalter nötig, die neben dem räumlichen Platzbedarf auch noch den elektrischen Verdrahtungsaufwand in die Höhe treiben.

Weiterhin ist aus der US 2005/0158695 A1 eine taktile Anzeigevorrichtung bekannt, bei der die Bildinformation als Höhenunterschiede zwischen in einer Matrixanordnung kreuzförmig angetriebenen taktilen Stiften anzeigt wird und bei der unter der Ebene einer Stiftplatte eine Führungsplatte mit Reibungsschluss für die taktilen Stifte angeordnet ist.

Weiterhin ist aus der JP 2004-7101677-A eine taktile Anzeigevorrichtung bekannt, bei welcher der eigentliche taktile Tast-Stift an einem Ende mit einem Betätigungs-Stab fest verbunden ist, dessen Durchmesser kleiner als der Durchmesser des eigentlichen Tast-Stiftes ist. Die Stellglieder, die das Vorspringen oder Zurückziehen der Taststifte steuern, werden von einer beweglichen Einheit, welche sich mit hoher Geschwindigkeit vertikal und horizontal bewegen kann, gesteuert, so dass eine scharfe taktile Anzeige mit hoher Auflösung erzielbar ist.

Eine reine Eingabevorrichtung mit haptischer Rückmeldung eines Tasten-Drucks über Spulen und bewegliche Magnete beschreibt DE 10 2010 012 247 A1. Im Unteranspruch 6 wird auf eine matrix-ähnliche Verschaltung mit Anschluss von Spulen an mindestens einen Multiplexer hingewiesen. Allein schon durch die Bezeichnung "Eingabevorrichtung" wird klar, dass der Aufbau in der beschriebenen Form keinesfalls als Ausgabe-Einheit (z.B. als taktiles Grafik-Display) verwendbar ist.

Dieselbe rein passive Funktionsweise zeigt auch DE 10 2014 104 633 A1, wo jeweils zwei Spulen paarweise gekoppelt, Matrix -mäßig zu einem Spulenfeld verschaltet sind.

Eine ökonomische Matrix-Verschaltung von Signalen beschreibt auch DE 10 2004 055 939 B4. Die Anwahl erfolgt hier über elektrische Sperrelemente in den elektrischen Leitungen in Verbindung mit weiteren kapazitiven Elementen, was sich im durch diese Anmeldung behandelten taktilen Anwendungsfall wegen der Spulen - Bestromung über eine angelegte Gleichspannung von vornherein verbietet. Auch diese Matrix-Verschaltung arbeitet elektrisch gesehen ausschließlich in eine Richtung.

Ein Matrix-Sensorelement ist auch in DE 10 2010 000 669 A1 beschrieben. Die dort fokussierte Anwendung bezieht sich auf im Fußboden verlegte Raumdetektoren zur Detektion von Personen. Diese ebenfalls nur in unidirektionaler Richtung arbeitende Vorrichtung verwendet als Nutzinformation die Veränderung der Eigenfrequenz von Oszillatoren, benötigt also neben den Spulen auch noch zusätzliche kapazitive Bauelemente.

Für stark sehbehinderte Menschen gibt es eine Fülle von optischen Sehhilfe-Geräten, die meist durch Vergrößerung und Kontrasterhöhung Hilfestellung bieten. Für völlig erblindete Menschen stellt diese Art von Geräten naturgemäß keinerlei Hilfe dar. Der Einsatz von akustischen Hilfsgeräten bringt zwar z.B. beim "Auslesen" von Texten eine Hilfe, gibt dem Blinden aber keinerlei weitere grafische oder optische Information. Umgekehrt verfügt der massiv sehbehinderte in der Regel aber über eine ausgeprägt gute taktile Empfindsamkeit in seinen Fingerspitzen, meist bedingt durch das intensive Training mit dem Lesen der Braille-Schriftzeichen.

Deshalb sind taktile Displays für die Ausgabe der Daten von Computern (PCs) für sehbehinderte Menschen als sog. "Braille-Zeilen" weit verbreitet. Inzwischen sind auch großflächige taktile Grafik-Displays mit einer hohen Anzahl (z.B. 250 x 400) von Fühlpositionen technisch realisierbar. Erste Exemplare derartiger Displays werden inzwischen als Prototypen für stationäre Anwendungen auf einschlägigen Messen vorgestellt.

Gerade im Hinblick auf die in der Regel vorhandene hohe taktile Kompetenz der Nutzer von taktilen Grafik-Displays bzw. Standard- Braille- Zeilen wird der Ruf nach einer universellen (= nicht nur auf Textvorlagen beschränkten) mobilen taktilen Sehhilfe für Blinde laut: Erschließung der visuellen, durch die Sehbehinderung nicht direkt zugänglichen Domäne, unter Einsatz der eigenen taktilen Fähigkeiten und eines hierfür maßgeschneiderten neuen Hilfsmittels. Entscheidend zur Durchsetzung am Markt wird die intuitive Nutzbarkeit des Gerätes sein: es wird erwartet, dass praktisch ohne zusätzliches intensives Training der unbewusste Ablauf des "normalen" menschlichen Gesichtssinns als Ganzem mit fovealem und periphärem Sehen auf taktiler Ebene simuliert werden kann und die Sehhilfe dabei auch mobil einsetzbar ist.

Erste Anfänge des Versuchs, optische Strukturen in für den Blinden fühlbare Information mit nennenswerter Orts-Auflösung zu erhalten sind in DT 2330403 A1 beschrieben. Hier wird mittels eines Kontakt- Verfahrens, also ohne linsenoptische Abbildung, eine planare Kontrast-Struktur in eine analoge elektrische Ladungsmuster-Matrix mit einer bestimmten, konstruktionsbedingten lateralen Auflösung übertragen. Als Sensor für diese Information wird die menschliche Haut, wegen der ebenen Konstruktion der Ladungsträger-Matrix bevorzugt die Stirnpartie des Menschen als Auflagefläche, vorgeschlagen. Allein schon abgesehen von der sehr beschränkten lateralen Auflösung dieser Methode ist dieses "Sehen mit der Haut" mit einem beträchtlichen, jahrelangen Trainings-Aufwand verbunden. Die Zuverlässigkeit des Verfahrens (z. B. die Problematik elektrischer Ladungen bei hoher Luftfeuchtigkeit) ist ebenfalls zweifelhaft. Zudem steht wegen des Fehlens abbildender Linsenelemente kein reales Abbild der 3- dimensionalen realen Umwelt zur Verfügung. Ein "taktiler Interaktions-Monitor (TIM) wird in DE 42 41 937 A1 vorgestellt. Dieses mehr theoretische Geräte-Konzept fußt laut Darstellung des Anmelders allerdings mehr auf ,,... philsophischen, sprachwissenschaftlichen, zeichentheoretischen und kognitionswissenschaftlichen Forschungsarbeiten..." und bietet keinerlei konkrete Hinweise für eine praktische technische Realisation durch den durchschnittlichen Fachmann. Auf Grund des damaligen Standes der Technik (1992) wird eine Vielzahl von kleinen taktilen Punktrastern (mit typisch max. 256 Punkte pro Matrix) eingesetzt. Die Rasterelemente (einige sind im Prinzip nur verkürzte Standard Braille-Zeilen) werden der Handfläche bzw. den Fingern des Blinden zwecks Abtastung fest zugeordnet. Trotz des Einsatzes einer Kamera / eines Scanners ist so auf keinen Fall eine lückenlos geschlossene, kontinuierliche taktile Darstellung eines Bildes der Umwelt möglich. Es wird versucht, diesen Nachteil im Wesentlichen durch eine Zoom und Ausschnitts-Funktion der Vorrichtung auszugleichen. Genau hier liegt der größte Nachteil des TIM: Die komplizierte Steuerung von Zoom und Ausschnitt verlangt nach einer Vielzahl zusätzlicher Funktionstasten, die quasi zeitlich parallel zum eigentlichen taktilen "Sehvorgang" noch bedient werden müssen. Gerade das im Text erwähnte menschliche Kurzzeitgedächtnis mit einer Speicherzeit von max. 8 Sekunden ist also bei der Bedienung des TIM total überfordert. Selbst das vom Anmelder eingeräumte, vermutlich 2 jährige zusätzliche Training für die erfolgreiche Orientierung in der realen Umwelt mit dem Gerät, ändert an der Grundtatsache der Gehirn-physiologischen Fakten wenig. Es zeigt sich einfach, dass der TIM mit Sicherheit eben nicht intuitiv nutzbar ist, eine parallele taktile Substitution des "normalen" Sehsinnes also keinesfalls stattfinden kann.

Der Einsatz einer Kamera montiert in einer brillen-ähnlichen Konstruktion wird in DE 10 2005 000 820 A1 beschrieben. Diese mobile Anordnung betrifft aber ausdrücklich die Verbesserung der Sehfähigkeit bei einer lediglich sehbehinderten Person und benutzt folgerichtig auch rein optische Methoden zur Bildausgabe. Es sind keinerlei taktile Vorrichtungen vorgesehen, die bei einem Hilfsmittel für völlig erblindete Menschen unabdingbar sind.

Der Erfindung liegt gegenüber den bekannten taktilen Displays mit linearen magnetischen Aktuatoren die Aufgabe zugrunde, einen solchen elektromagnetischen Aktuator für taktile Anwendungen zur Verfügung zu stellen, insbesondere für taktile Stifte in braille-Schrift-Displays und grafischen Flächendisplays, mit dem eine mechanisch-konstruktiv einfache und preiswerte bistabile elektromagnetische lineare Antriebseinheit realisiert werden kann. Weiterhin soll mit den Aktuatoren dabei ein Display mit minimaler Bauhöhe realisiert werden. Weiterhin soll das Eindringen von Schmutzpartikeln in den Innenraum des Aktuators minimiert werden. Weiterhin soll eine einfache und kostengünstige Anordnung zur elektrischen Beschaltung von elektromagnetischen Aktuator - Spulen bereitgestellt werden, die es erlaubt, das taktile Anzeige-Display ausschließlich mittels der bereits vorhandenen Aktuator-Spulen zur Ausgabe von Daten auch als Eingabe-Einheit zu nutzen, ohne dass zusätzliche Eingabe-Schalter oder weitere Eingabe-Sensoren verbaut werden müssen. Schließlich soll dem Blinden eine Vorrichtung zur Verfügung gestellt werden, die ihm eine möglichst perfekte Substitution und Simulation des "normalen" menschlichen Gesichtssinns auf taktiler Ebene bietet.

Diese Aufgabe wird erfindungsgemäß bei einem taktilen Display nach dem Oberbegriff des Patentanspruchs 1 dadurch gelöst, dass der Stab des Aktuators aus einem Material mit sehr hoher Koerzitivfeldstärke besteht, dass dieser axial von einer höchstens gleich langen, hartmagnetischen Hülse mit deutlich geringerer Koerzitivfeldstärke umschlossen und in axialer Richtung frei beweglich ist und dass der Stellweg des Stabs durch dessen Überlänge im Vergleich zur Länge der hartmagnetischen Hülse festgelegt ist, derart, dass sich an einem Ende des Stabs ein Hilfs-Pol und am gegenüberliegenden Ende ein tellerartiger Haupt-Pol ausbilden kann, und dass das axiale Magnetfeld einer Spule, welche Stab und Hülse gemeinsam umschließt, nur das Material der Hülse nicht aber dasjenige des Stabes in der magnetischen Polarität umschalten kann.

Beim erfindungsgemäßen Aktuator wird der hartmagnetische, an einem Ende als speziell geformter Teller ausgebildete polarisierte Stab im Inneren der ebenfalls hartmagnetischen Hülse beweglich derart angeordnet, dass der Teller selbst immer außerhalb der Hülse positioniert ist. Die Koerzitiv-Feldstärke des Materials der den Stab umgebenden Hülse ist dabei deutlich geringer als diejenige des beweglichen Stabes. Somit ist gewährleistet, dass zwar die Hülse von der beide Hartmagneten (Stab und Hülse) umgreifenden, bestromten Spule gezielt umgepolt werden kann, die Polarisierung des beweglichen Stabes hierdurch aber nicht verändert wird. Nur für den kurzen Moment der eigentlichen Um-Magnetisierung ( < 1 µs) des Hülsen-Materials muss der Maximal-Strom für die Spule bereitgestellt werden. Die Endlage "oben" liefert die maximale Haltekraft und wird durch die magnetische Anziehung zwischen dem speziell geformten Teller (= "Hauptpol", Anker) und der geeignet dimensionierten Stirnfläche der umgebenden Hülse realisiert. Diese Stirnfläche ist so dimensioniert, dass sie im Zusammenspiel mit dem speziell geformten Hauptpol die benötigte Haltekraft bereitstellt, diese dabei jedoch genau so einrichtet, dass sie im Umschaltfall (Hülse und Spulenstrom umgepolt) überwunden werden kann und sich der Anker somit zur anderen Endlage bewegen kann. Die geometrische Position der Endlage "unten" wird durch die Gesamtlänge des Stabes und damit dem Abstand des "Hilfspoles" vom Anker klar definiert.

In Weiterbildung der Erfindung hat, gemäß Patentanspruch 2, der Haupt-Pol die Kontur eines Kegels oder eines Kegel-Stumpfes oder eines Kegel-Stumpfes mit scheibenförmiger Grundfläche als tellerartige Erweiterung, wobei die Höhe des Kegels oder des Kegel-Stumpfes oder die Höhe der tellerartigen Erweiterung des Stabes bewirken, dass das Streufeld des tellerartigen Haupt-Pols in der "unten"- Position des Aktuators nicht mehr in der Lage ist, die Magnetisierung der Hülse umzuschalten, wobei ein Ende der hartmagnetischen Hülse eine kragenförmige Erweiterung aufweist, deren Durchmesser derart dimensioniert ist, dass die kragenförmige Erweiterung die angrenzende Stirnfläche der umschließenden Spule zumindest teilweise, maximal 95 % des Durchmesser-Wertes des tellerartigen Haupt-Pols des hartmagnetischen Stabes überdeckt und wobei das Verhältnis der besagten Koerzitivfeldstärken der beiden hartmagnetischen Materialien von Stab und Hülse mindestens den Wert 3:1 erreicht

Diese Weiterbildung weist den Vorteil auf, dass auf einfache Art und Weise die räumliche Ausdehnung des Streufelds gezielt beeinflusst werden kann, so dass eine enge (= Raster-Abstand kleiner oder gleich 2,5mm) flächige Aneinanderreihung der Einzel-Aktuatoren in einem braille-Schrift-Display und/oder grafischen Flächendisplay gewährleistet sein kann.

In Weiterbildung der Erfindung sind, gemäß Patentanspruch 3, die Aktuatoren des Displays in parallel verlaufenden und senkrecht gestaffelten Ebenen derart angeordnet, dass die lateralen gegenseitigen Abstände der Aktuatoren in einer Ebene größer sind, als das für die Stift-Platte vorgegebene Rastermaß.

Diese Weiterbildung ermöglicht auf überraschend einfache Art und Weise die Realisierung eines Displays mit minimaler Bauhöhe, wobei die einzelnen Axial-Aktuatoren zweidimensional - versetzt parallel zur Stift-Platten-Ebene mit Stiften des Flächen-Displays angeordnet werden. Die Arbeitsrichtung der einzelnen Aktuatoren und die Ebene der Stift-Platte stehen senkrecht aufeinander.

In Ausbildung der Erfindung ist, gemäß Patentanspruch 7, zum zuverlässigen Betrieb der beweglicher Taststifte unter der Ebene der Stift-Platte eine mechanische Schmutzblende angeordnet, die durch geometrische Abschattung das Eindringen von Schmutzpartikeln in den Innenraum minimiert.

Diese Ausbildung weist den Vorteil auf, dass es nun möglich ist, sowohl das Größen-Spektrum als auch die Menge der in der Umgebung des Aktuators abgelagerten Schmutz-Partikel zu minimieren. Dadurch dass unter der Führung des Einzelstifts in der Stift-Platte eine geometrisch als Schmutzblende wirkende Vorrichtung eingebaut ist, wird der eigentliche Aktuator von Schmutz abschirmt. Die fertigungstechnische Schwierigkeit, dabei hochpräzise mechanische Passungen zwischen Stift -Platte und Aktuator zu gewährleisten wird umgangen, indem der Stift mit dem Aktuator über eine lösbare magnetische Verbindung gekoppelt ist, die sich schon beim ersten Montagevorgang in der Fertigung des Displays von selbst geometrisch justiert. Für den späteren Servicefell entsteht der zusätzliche Vorteil, dass der Endnutzer (mit Hilfe eines sehr einfachen Greifwerkzeuges oder den Fingernägeln) den einzelnen Stift von außen aus dem Display entfernen kann, um anschließend mittels einer Reinigung gezielt den betroffenen einzelnen Stift selbst sowie dessen Führungsflächen wieder funktionstüchtig zu machen.

In Weiterbildung der Erfindung weist, gemäß Patentanspruch 9, die zur Ansteuerung von Zeilen-und Spaltenweise verbundener Spulen vorgesehene Schaltmatrix Spulen mit im Inneren jeweils einen hartmagnetischen axial beweglichen Kern auf, so dass die einzelne Spule sowohl passiv als Sensor über die elektromagnetische Induktion durch mechanische Verschiebung des hartmagnetischen Kerns, als auch mechanisch aktiv als Aktuator mittels gezielter Bestromung der Spule fungieren kann.

Diese Weiterbildung weist den Vorteil auf, dass auf einfache Art und Weise eine einfache und kostengünstige Anordnung zur elektrischen Beschaltung von elektromagnetischen Aktuator - Spulen bereitgestellt wird, die es erlaubt, das taktile Anzeige-Display ausschließlich mittels der bereits vorhandenen Aktuator-Spulen zur Ausgabe von Daten auch als Eingabe-Einheit zu nutzen, ohne dass zusätzliche Eingabe-Schalter oder weitere Eingabe-Sensoren verbaut werden müssen.

Eine Weiterbildung der Erfindung, gemäß Patentanspruch 14, mit Verwendung eines taktilen Displays nach einem oder mehreren der Ansprüche 1 bis 13 für eine intuitiv nutzbare optisch-taktile Sehhilfe zur Substitution des menschlichen Seh-Sinns, ist dadurch gekennzeichnet, dass die primäre optische Bildinformation einer Kamera, welche als Flächen-Sensor oder Zeilen-Sensor ausgestaltet ist, nach Durchlaufen einer software-mäßigen Bildbearbeitung zwecks Datenreduktion und Bilderkennung einem großflächigen taktilen Display als Anzeigevorrichtung zugeführt wird, wobei die Zahl der taktilen Rasterpunkte mindestens 50 x 80 = 400 beträgt und dass zwischen der Kamera und der taktilen Anzeigevorrichtung eine Vorrichtung zur digitalen Daten-Verarbeitung geschaltet ist, wobei das Bildfeld der Kamera in mindestens zwei Bereiche aufgeteilt wird, die das primäre optische Bild mit unterschiedlicher taktiler Auflösung darstellen und wobei die Bild-Auffrischung der unterschiedlichen taktilen Bereiche in jeweils verschiedenen Zeitabständen (Frequenz) erfolgt.

Diese Weiterbildung weist den Vorteil auf, dass auf einfache Art und Weise die vorhandenen taktilen Fähigkeiten dabei ausreichen, rein intuitiv, d.h. ohne durch weitere kognitive Steuerungs- und Kontroll-Funktionen, auf einem großflächigen taktilen Punktraster (typisch mindestens 80 x 100 Punkte) Darstellungs- und Warn-Möglichkeiten des Gesichtssinns zu substituieren. Wesentlich ist hier insbesondere die evolutionsbedingte Architektur: bewusstes Sehen (mit hoher Auflösung) versus unbewusstes, dafür aber schnelles periphäres Sehen (mit geringer Auflösung) in die taktile Domäne zu übertragen. Der Trainingsaufwand übersteigt dabei den üblichen Aufwand zur Gewöhnung an ein neues taktiles Hilfsmittel nicht.

In Ausbildung der Erfindung, gemäß Anspruch 15, wird ein System aus optisch-taktiler Sehhilfe und einem taktilen Display (54), nach einem der Ansprüche 1 bis 13 und verwendet wie in Anspruch 14, beansprucht.

Weitere Vorteile und Einzelheiten lassen sich der nachfolgenden Beschreibung von bevorzugten Ausführungsformen der Erfindung unter Bezugnahme auf die Zeichnung entnehmen. In der Zeichnung zeigt:
- Fig. 1a bis 1d: verschiedene Funktionsphasen einer ersten Ausgestaltung des erfindungsgemäßen magnetisch bistabilen axialsymmetrischen Linear-Aktuators,
- Fig. 2a bis 2e: fünf weitere Ausgestaltungen des Linear-Aktuators gemäß der Erfindung,
- Fig. 3: die Ausgestaltung gemäß Fig. 2d in einer weiteren Funktionsphase,
- Fig. 4: das Diagramm aus Haltekraft und Gegenkraft für verschiedene geometrische Kombinationen in Ausgestaltung des Linear-Aktuators gemäß der Erfindung,
- Fig. 5: die Ausgestaltung eines Displays mit zwei Aktuator-Ebenen gemäß der Erfindung,
- Fig. 6: das Lochmuster des Displays nach Fig. 5,
- Fig. 7: das Prinzip des Raster-Besetzungsmusters für eine Ausgestaltung eines Displays mit vier Aktuator-Ebenen,
- Fig. 8: eine Schrägbild-Skizze der gesamten Stapel-Anordnung für das Display mit 4 Aktuator-Ebenen nach Fig. 7,
- Fig. 9: eine Darstellung zur Verschmutzungs-Situation bei einem taktilen Display,
- Fig. 10: die Verschmutzungs-Situation bei einem taktilen Display mit einer Schmutzblende und beweglichen Taststiften und magnetischer Ankopplung mit Selbstjustierung gemäß der Erfindung,
- Fig. 11: das Einsetzen oder Entfernen eines beweglichen Taststifts für eine Vorrichtung/ taktiles Display nach Fig.10,
- Fig. 12: die Verschmutzungs-Situation für eine zweite Ausgestaltung eines taktilen Displays mit einer Schmutzblende und beweglichen Taststiften und magnetischer Ankopplung mit Selbstjustierung gemäß der Erfindung,
- Fig. 13a, 13b: die Verdeutlichung der Selbstjustierung für die Displays nach Fig. 10 bis Fig. 12,
- Fig. 14: den Aufbau und die Beschaltung einer Spulen-Matrix für die aktive Aktuator-Funktion gemäß der Erfindung,
- Fig. 15: die Spulen-Matrix nach Fig. 14 im hochohmigen Eingabezustand der Vorrichtung.
- Fig. 16: die Block-Anordnung einer intuitiven Sehhilfe mit einem Flächendisplay mit konstantem Rasterabstand der taktilen Punkte gemäß der Erfindung,
- Fig. 17: eine Ausgestaltung mit einem Flächendisplay mit geometrisch nicht einheitlichem Punktraster,
- Fig. 18: eine Ausführungsform mit einer Anordnung von Kamera Datenverarbeitung und taktiles Display in einem Gehäuse,
- Fig. 19: eine Ausführungsform mit eingebauter Zeilenkamera / Scanner
- Fig. 20: eine Ausführungsform als mobile Variante, insbesondere Smartphone.
- Fig. 21: die Ausführungsform nach Fig. 20 in Seitenansicht und
- Fig. 22: eine weitere Ausführungsform der mobilen Variante.

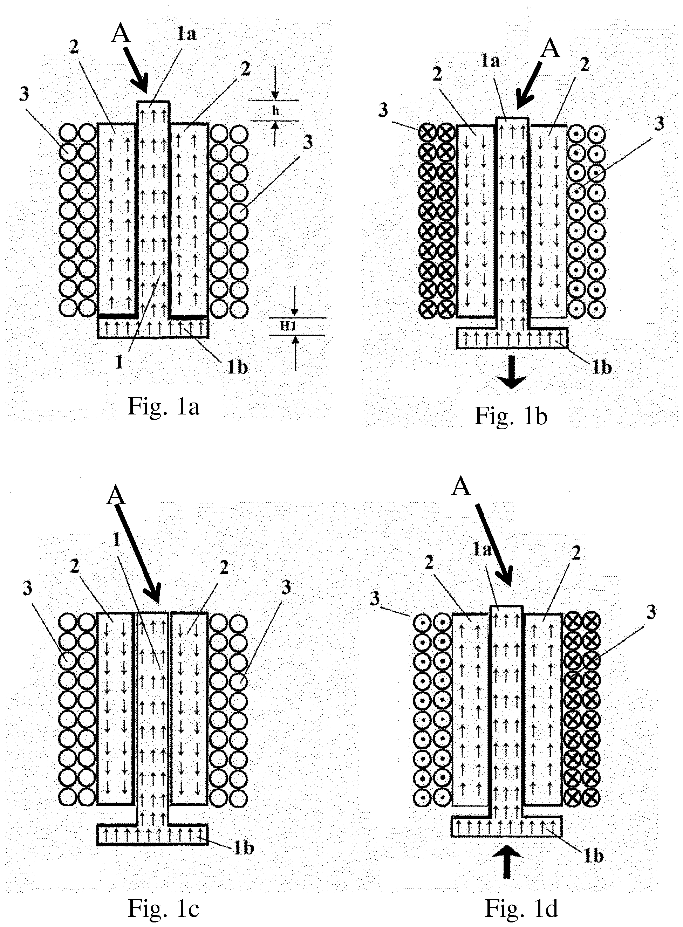

In Fig. 1a wird zur Verdeutlichung der rein magnetischen Funktionsweise eine Ansicht eines erfindungsgemäßen magnetisch bistabilen axialsymmetrischen Linear-Aktuators A (als Teil des erfindungsgemäßen Displays 54) der "oben" - Position des Stabes 1 gezeigt. Bei dieser und den folgenden Darstellungen (siehe Fig. 1b, Fig. 1c, Fig. 1d) wird aus Gründen der Übersichtlichkeit zunächst nur ein rechteckiger Querschnitt der axialsymmetrischen Pole herangezogen. Der linear frei bewegliche hartmagnetische Stab 1 gleitet in der ebenfalls hartmagnetischen Hülse 2.

Dargestellt ist die stabile "oben" Position, bei der die Spule 3 nicht bestromt ist. Der tellerförmige Haupt-Pol 1b gewährleistet die räumlich klar definierte, mit maximaler Kraft eingehaltene "oben"- Position des Stabes 1. Die Dicke des Hauptpols 1b ist mit "H1" bezeichnet. Mit "h" ist der Überstand des Hilfspols 1a als Differenz zur Länge der Hülse 2 bezeichnet. Die in beiden Materialien vorliegenden axialen Magnetisierungs-Richtungen sind durch Pfeile gekennzeichnet. Die Darstellung der Magnetisierungsrichtungen ist dabei als Prinz-Skizze zu betrachten.

Fig. 1b zeigt die Übergangs-Phase von der "oben" zur "unten Position, bei der die Hülse 2 bereits durch das Magnetfeld der nunmehr bestromten Spule 3 (wie durch die Punkte und Kreuze in den Draht-Querschnitten veranschaulicht) umgepolt ist. Der dicke vertikale Pfeil deutet die Bewegung nach unten an, die dargestellte Magnetisierung ist schematisch zu sehen, wie bereits bei der Beschreibung von Fig. 1a ausgeführt wurde.

Fig. 1c zeigt die stabile "unten"-Position des Stabes 1, ebenfalls mit unbestromter Spule 3 und durch Pfeile gekennzeichnete Magnetisierungs-Richtungen. In dieser Lage dient das obere Ende 1a des Stabes 1 als Hilfs-Pol, der die "unten" Lage des gesamten Stabes 1 kraft- und positionsmäßig realisiert. Über die Dicke H1 des Ankers wird prinzipiell der räumliche Stärke-Abfall des magnetischen Feldes des Haupt-Pols 1b an dessen Oberseite gesteuert (Entmagnetisierungsfelder im Inneren des Pols). Die Feldstärke wird dabei so eingerichtet, dass in der "unten" - Position des Stabes (siehe Fig. 1c) keine Ummagnetisierung des HülsenMaterials durch das Streufeld des Ankers 1b geschehen kann und die Position somit geometrisch und kraftmäßig stabil ist.

Zur Realisierung der Aufwärtsbewegung des Stabes 1 fließt der Spulenstrom dann in die Gegenrichtung, mit nunmehr umgekehrter Magnetisierung der Hülse 2 und entsprechend umgekehrter Kraftrichtung, wie in Fig. 1d dargestellt. Der dicke Pfeil kennzeichnet nun die Bewegungsrichtung nach oben.

Bei der technischen Realisation zeigt sich der Übergang von Fig. 1a (unbestromte, stabile Lage "oben") zur Situation in Fig.1b (gerade ummagnetisierte Hülse 2 mit bestromter Spule) als besonders kritisch, weil mit der Forderung nach hoher "oben" - Haltekraft des Aktuators A einerseits und einer mit vertretbaren Spulenströmen (z.B. unter 3 A) möglichen Trennung des Tellers 1b von der Hülse 2 andererseits, zwei gegeneinander arbeitende Phänomene beteiligt sind: große Haltekraft erfordert starke Anziehung zwischen Hauptpol 1b und Hülse 2, während leichte Ablösbarkeit der Partner durch moderate Spulenströme gerade ein schwächeres Hauptpol - Feld fordert. Zudem sind die sich tatsächlich einstellenden mikro-magnetischen Polarisationsverhältnisse in der Hülse 2 quantitativ schwer zu erfassen und können im Detail schon gar nicht durch das "von außen" angreifende makroskopische Spulenfeld gesteuert werden.

In Hinblick auf den Energiebedarf sind auch die elektrischen Schaltzeiten der Anordnung zu berücksichtigen. Das Feld des sich von der Hülse 2 entfernenden tellerförmigen Haupt-Pol 1b muss so schwach sein, dass es das Hülsenmaterial nicht mehr umschalten kann, wenn nach Abschalten des Spulenstroms die Unterstützung des abstoßenden Spulen-Magnetfeldes nicht mehr gegeben ist. Im aktiven Fall (Aktuator-Betrieb) ist die typische Anstiegszeit des Spulenstromes ca. 300µs, entsprechend der Induktivität der eingesetzten Spule 3 (typische Maße: Außendurchmesser 3.2mm, Länge 4mm, ca. 250 Windungen) bei einer typischen Ansteuerspannung von ca. 30V. Für die sichere Funktion des derart dimensionierten Aktuators A sind nur ca. 3A Spulenstrom bei einer Einschaltdauer von ca. 1ms erforderlich.

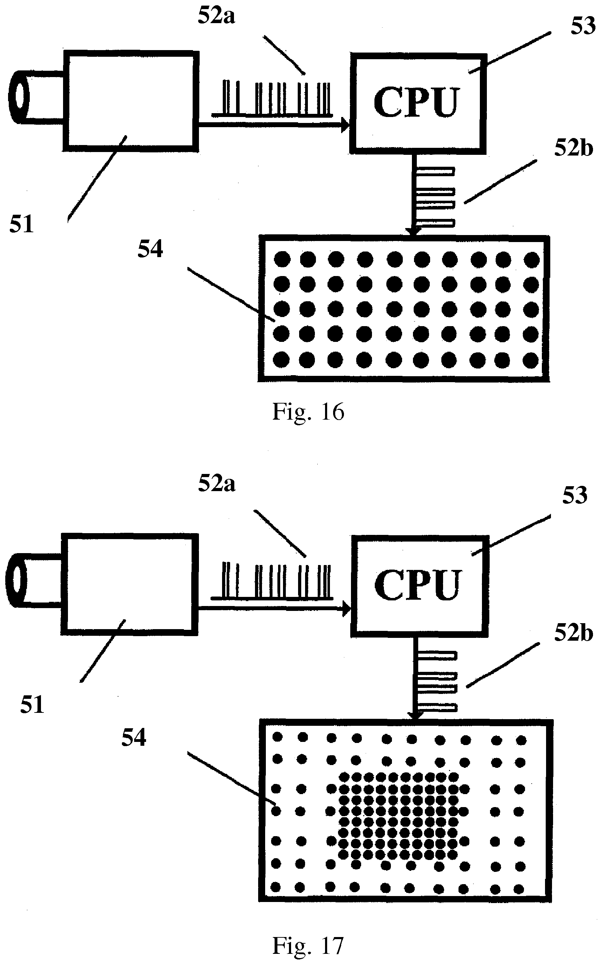

Im passiven Fall ( Betrieb der Anordnung als taktile Eingabe-Einheit (siehe Fig. 16 Display 54), trivialerweise muss der taktile Pin dann in der "oben"-Position sein) gelten die physikalischen Zusammenhänge der elektromagnetischen Induktion: abhängig von der Rate der magnetischen Fluss-Änderung durch die Spule - bewirkt durch die Bewegung von Hauptpol 1b und Hilfspol 1a beim Niederdrücken des angekoppelten taktilen Stiftes - stellt sich über den Spulenenden eine elektrische Potentialdifferenz ein. Mit der Dynamik eines taktilen Fingerdrucks lassen sich auf diese Weise Induktionsspannungen von ca. 35mV erzielen. Die zeitliche Pulsform ist verhältnismäßig komplex, bestehend aus dem Basis-Verlauf entsprechend der rein mechanischtaktilen Bewegungsrate und einem pegelmäßig kleineren höherfrequenten Anteil. Vermutlich nutzt man hier 2 parallele Vorgänge: einerseits wird die Magnetisierung der Hülse 2 durch das "langsame" räumliche Entfernen des tellerförmigen Hauptpols 1b insgesamt herabgesetzt ( Entspannung der beteiligten Domänen-Magnetisierung in ihre ursprüngliche Orientierung der leichten magnetischen Achse) und zudem beginnt der Hilfspol 1a beim gleichzeitigen Eintauschen in das Oberteil der Hülse 2 bereits mit der Ummagnetisierung der ersten Domänen des Hülsenmaterials. Aufgrund der mikro-magnetischen Form-Anisotropie der verwendeten Materialien geschieht dieses Umklappen der lokalen Domänen-Magnetisierung erst ab einer gewissen Feld-Schwelle, dann aber "schlagartig", womit sich der hochfrequente Pulsanteil erklärt.

Beim Loslassen des taktilen Stifts federt dieser in die ursprünglich gesetzte "oben" Position zurück, wie es für die weiterhin korrekte Anzeige der Daten (= gesetzte braille-Pins) für den Aktuator im Ausgabe-Modus erforderlich ist. Der Spannungspeak beim Loslassen ist tendenzmäßig ca. 20% höher, mit vermehrt auftretenden hochfrequenten Anteilen beim "Aufschlagen" des Hauptpols 1b auf die Stirnfläche der Hülse 2. Bei Verwendung einer geeigneten elektrischen Detektions-Technik (insbesondere eine "partial-response"-Detektion, wie in der magnetischen Speicherung beim HDD- Auslesen üblich ist) kann man den erfindungsgemäßen bistabilen Aktuator A auch als Eingabe-Einheit verwenden. Dank der Matrix-Ansteuerung der Spulen 3 ist dabei sogar die Position des gedrückten Pins bekannt. Damit kann auf überraschend einfache Art und Weise, am taktilen Display 54 ein Maus-Cursor simuliert und kann am Computer eine 1:1 Übertragung der Bildschirm-orientierten Arbeitsweise in die taktile Domäne des blinden PC-Nutzers realisiert werden.

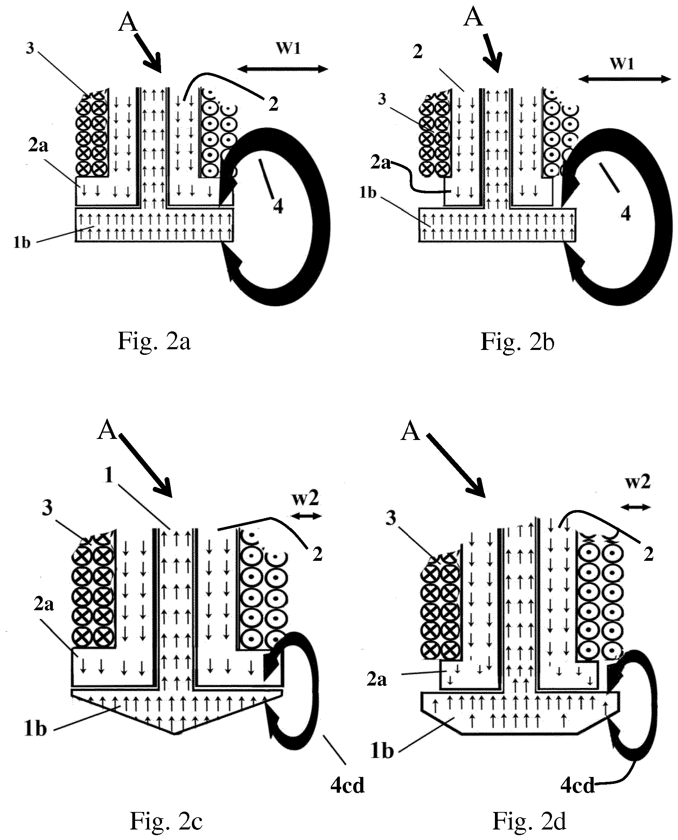

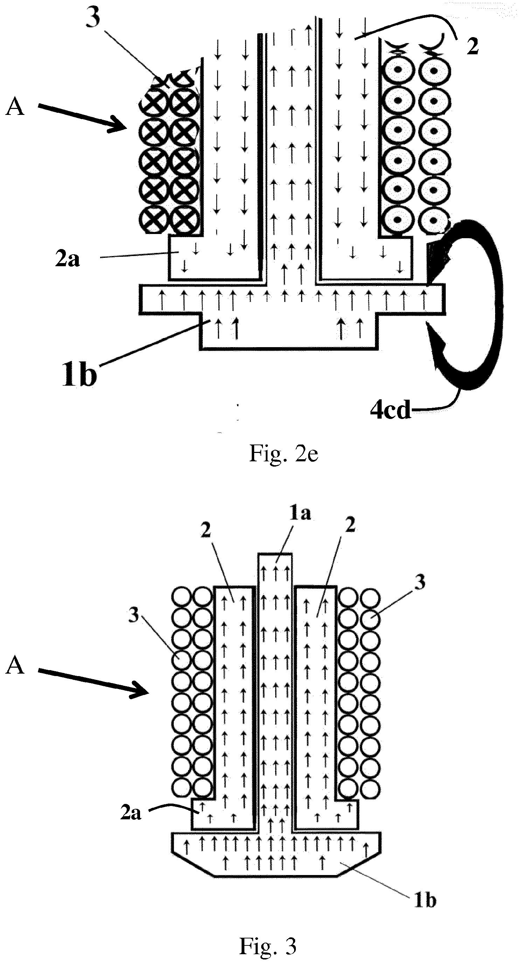

Diese Erkenntnisse sind die Gründe für die neuartige, spezielle Ausgestaltung der Polformen des Aktuators A in der vorgestellten taktilen Anwendung. Die Gruppe der Darstellungen Fig. 2b, 2c, 2d und 2e zeigt den Effekt dieser speziellen Kontur von Hauptpol/Teller 1b und Hülse 2 auf die Magnetfelder im Vergleich zu einer einfachen Zylinder-Form mit 1:1 Größen-Passung der Durchmesser von Teller 1b und Hülse 2 wie in Fig. 2a dargestellt. Dort wird das (starke) Streufeld 4 des Hauptpols 1b lediglich symbolisch durch die Stärke und laterale Position des gebogenen Doppelpfeils dargestellt. Man kann sich z.B. vorstellen, dies sei in etwa die räumliche Ausdehnung, bis zu der das (starke) Streufeld 4 des Hauptpols 1b noch in der Lage wäre, das niederkoerzitivere Material der Hülse 2 trotz Präsenz des Spulenfeldes dominant zu magnetisieren. Mit W1 bzw. w2 wird diese räumliche Ausdehnung der entsprechenden Streufelder 4 bzw. 4cd angedeutet. W1 ist dabei deutlich größer als w2. Der physikalische Hintergrund wird nur rein qualitativ gezeigt um die speziellen Auswirkungen der Pol-Konturen zu verdeutlichen.

Betrachtet man allein die Haltekraft in der "oben" - Position, so erscheint zunächst die Ausführungsform der Fig. 2a in Bezug auf die Haltekraft als die optimale Lösung für die taktile Anwendung. Jedoch erfordern die Magnetisierungs- ,Kraft- und Feld - Verhältnisse der beteiligten Komponenten Hülse 2, Stab 1, Teller 1b und bestromte Spule 3 im Umschaltfall ( siehe hierzu Situation Fig. 1a zu Situation Fig. 1b) eine genau kalkulierte Absenkung eben dieser maximalen Haltekraft, was durch die Adjustierung des Durchmesser-Quotienten von Teller 1a und Kragen der an einem Ende erweiterten Hülse 2 erreicht wird. Man erkennt, wie die (starken) Randfelder (Streufelder) 4 des Tellers 1b im Falle der Fig. 2b "ins Leere" greifen, während in Fig. 2a eben wegen dieser Randfelder die maximale Anziehungskraft zwischen Teller 1b und Hülse 2 erreicht wird. Die technische Realisierung zeigt nun, dass mit vertretbaren Spulenströmen (von z.B. unter 3A) keine ausreichende Gegenkraft zur Ablösung erzeugt werden kann, wenn ein moderater Spulenstrom und die Hülsen-Magnetisierung eine Abwärtsbewegung des Stabes 1 einleiten sollen.

Die kegelförmige spezielle Ausführung des Tellers 1b in Fig. 2c bewirkt genau diese Absenkung des maximalen Haltefeldes und sorgt zusätzlich für eine deutliche, zielgerichtete Verkleinerung des magnetischen Streufeldes 4cd zu einem bzw. mehreren weiteren benachbarten Aktuatoren, die aus Gründen der Übersichtlichkeit nicht in die Darstellungen eingezeichnet sind. Beide Kontur-Maßnahmen können in der technischen Realisation je nach aktuellen Feld-Verhältnissen (bedingt z.B. durch Details des verwendeten magnetischen Materials und den Abstands-Verhältnissen zwischen den Stiften benachbarter Aktuatoren) gemeinsam (Fig. 2d , wo der Teller 1b exemplarisch als Kegelstumpf ausgeführt ist, Fig. 2e wo eine alternative stufige Ausführungsform der Kontur gezeigt wird), aber jeweils auch nur einzeln eingesetzt werden (Fig. 2b, Fig. 2c).

In Fig. 3 wird die erfindungsgemäße Anordnung am oberen stabilen Arbeitspunkt, ohne Bestromumg der Spule 3 gezeigt. Die hier relevanten Magnetisierungen von Hülse 2 und Stab 1 sind schematisch angegeben.

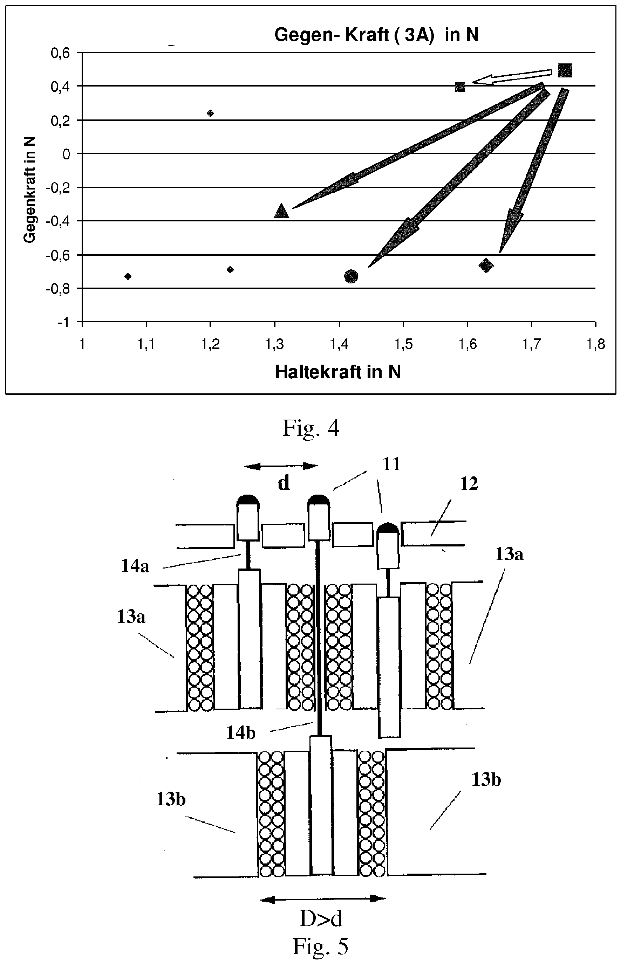

In Fig. 4 werden die konkreten Auswirkungen der beschriebenen Konturierungs-Maßnahmen der Pole für verschiedene geometrische Kombinationen ausgeführt. Koerzitiv-Feldstärken und Sättigungsmagnetisierungen der Stab und Hülsen - Materialkombination (1, 2) waren (9700 A/cm bei 1,2 Tesla) bzw. (480 A/cm bei 1,38 Tesla). Aufgetragen ist die "Gegenkraft", die für die Abwärtsbewegung des Stabes 1 negativ sein muss, über der erreichten (positiven) Haltekraft in der stabilen "oben"-Position. Bei Verwendung eines Tellers 1b mit Durchmesser 3,3mm und Höhe 1,5mm ergibt sich die beste Haltekraft von 1,75 N. Jedoch ist die Anordnung nicht brauchbar, weil sich beim Ummagnetisieren (3A Strom) eine positive, also nach oben gerichtete Gegenkraft ergibt: der Teller 1b bleibt an der Hülse 2 hängen.

Rein skalen- technische Maßnahmen (Durchmesser 3,0 mm und Höhe 1,0 mm) bringen die Anordnung nicht in den funktionellen Bereich (in Fig. 4 angedeutet durch den offenen Pfeil, weisend vom großen Quadrat-Symbol zum kleineren). Erst die beschriebenen Kontur-Maßnahmen für die Pole bringen die gewünschten negativen Werte für die Gegenkraft, verbunden mit akzeptabler, leichter Reduktion der Haltekraft, wie durch die schwarz ausgefüllten dicken Pfeile verdeutlicht. Die beiden unteren Pfeile zeigen den Effekt der Durchmesser-Reduktion des Hülsen-Kragens (um 30% bzw. 50 %), während der obere dicke Pfeil (zum dreieckigen Symbol) den Effekt der Kegel-Konturierung des Hauptpols 1b demonstriert. Das (weitere) Absinken der Haltekraft ist verständlich, jedoch überwiegt im Einsatz dann der Vorteil des geringeren Streufeldes zu Nachbar-Aktuatoren, wie bei Fig. 2c, 2d bereits beschrieben.

Wie in Fig. 5 im Querschnitt am Beispiel von zwei Aktuator-Ebenen 13a und 13b vereinfachend gezeigt, die einzelnen Axial-Aktuatoren A zweidimensional - versetzt parallel zur Stift-Platten-Ebene 12 mit Stiften 11 des Flächen-Displays angeordnet werden. Die Arbeitsrichtung der einzelnen Aktuatoren A und die Ebene der Stift-Platte 12 stehen senkrecht aufeinander. Die kraftschlüssige Verbindung des einzelnen Aktuators A zum taktilen Stift 11 wird dabei über das im Durchmesser verjüngte untere Teil 14a und 14b des taktilen Stifts 11 herbeigeführt. Falls der eigentliche taktile Stift 11 und dessen verjüngter unterer Teil 14a bzw. 14b als körperlich und materialmäßig getrennte Teile ausgeführt sind genügt es, einen Typ von taktilen Stiften 11 mit dem großen Nenndurchmesser, aber sonst gleicher Länge für beide Aktuator-Ebenen 13a und 13b vorzusehen. Bei dieser Darstellung des Grundprinzips an nur 2 Aktuator-Ebenen 13a und 13b wurde aus Gründen der Übersichtlichkeit die unterste Ebene der Ansteuer-IC's noch nicht eingezeichnet.

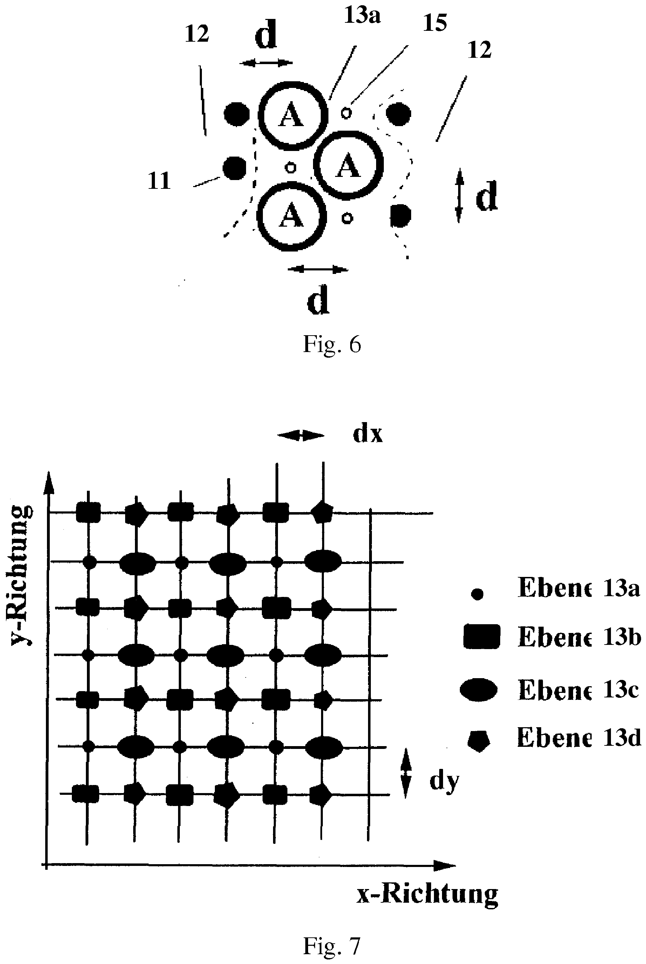

Fig. 6 zeigt das Lochmuster der Anordnung entsprechend Fig. 5 in der Draufsicht auf die obere Aktuator-Ebene 13a, wobei die darüber liegende Stift-Platte 12 mit Stiften 11 nur am Rand der Zeichnung angedeutet ist. Mit A ist jeweils die Montageposition des einzelnen Aktuators A bezeichnet. Die Durchgangsbohrungen 15 für den verjüngten Betätigungs-Teil der Stifte 14b der darunterliegenden Aktuator-Ebene 13b sind dem geforderten Rastermaß d entsprechend angebracht. Man erkennt die prinzipielle Möglichkeit, einzelne Aktuatoren mit einer lateralen Dimension größer als das vorgegebene Rastermaß zu montieren.

Fig. 7 zeigt das Prinzip des Raster-Besetzungsmusters von vier Aktuator-Ebenen 13a bis 13d in einem x- y-Koordinaten-System in der Draufsicht. Die Rastermaße können prinzipiell durchaus in x- und y-Richtung verschieden sein, wie durch die Bezeichnung dx und dy angedeutet. Man erkennt, dass für alle Ebenen 13a bis 13d identische 4-Positionen-Grundmuster in jeweils doppeltem Abstand des Stift-Platten-Rasters dx und dy, je nach Aktuator-Ebene in x und y-Richtung lateral so verschoben sind, dass letztlich alle Rasterpunkte der hier nicht eingezeichneten obersten Stift-Platte 12 abgedeckt werden können. Es sind im engen Stift-Raster (d x und dy) in praktisch jeder Ebene, bis auf die unterste Ebene 14d, Durchgangsbohrungen für die Betätigungs-Stäbe 14a, 14b, 14c, 14d der jeweils unteren Ebenen angebracht. Diese können von der Dimensionierung ihres Durchmessers her wegen des verjüngten Durchmessers des Betätigungs-Teils der Stifte so gestaltet werden, dass für die Aktuatoren A in der betreffenden Ebene der größtmögliche freie Raum zur Verfügung steht.

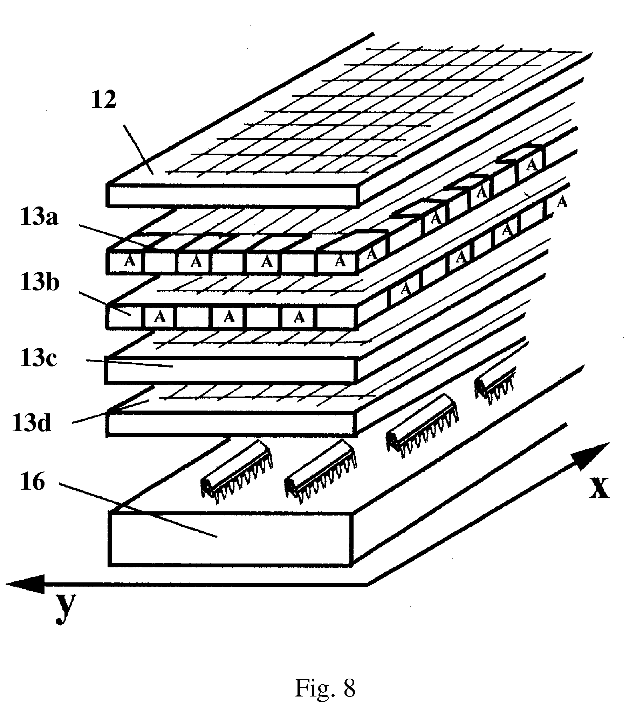

Man findet in Fig. 8 die schematische Schrägbild-Skizze der gesamten Stapel-Anordnung für den maximalen Fall von 4 Aktuator-Ebenen. Hier sind aus Gründen der Übersichtlichkeit nur für die außen liegenden Aktuatoren der Ebenen 13a und 13b Aktuator-Positionen eingezeichnet. In den Ebenen 13c und 13d starten die entsprechenden Positionen einen Rasterabstand weiter im Inneren der jeweiligen Ebene. Besetzt werden die Positionen entsprechend Fig.7: also z.B. für die unterste Ebene 13d an den Positionen der Oktogon-Symbole. Die Ebene 16, in der die integrierten Schaltkreise montiert sind, schließt das Display nach unten ab.

Vorteilhaft greift man bei der Herstellung der Aktuator- Ebenen 13a bis 13d auf bewährte Leiterplatten-Technologien zurück, mit deren Hilfe insbesondere die zahlreichen Durchbrüche in den Aktuator-Platten kostengünstig automatisch fertigbar sind. Auch die Bereitstellung notwendiger Verdrahtungen zur Aktuator-Ansteuerung (völlig unabhängig davon, welcher Aktuator-Typ tatsächlich eingesetzt wird) ist damit durch einen bestens eingeführten Fertigungsprozess gewährleistet. Schließlich lässt es der von Durchbrüchen freie Raum auf den Ebenen auf einfache Weise zu, auch die elektrischen Verbindungen (nicht eingezeichnet) zwischen den Ebenen bis zur Schaltkreis-Ebene 16 ähnlich den mechanischen Verbindungen zwischen Stift 11 und einzelnem Aktuator A senkrecht zur Stift-Platte 12 verlaufen zu lassen.

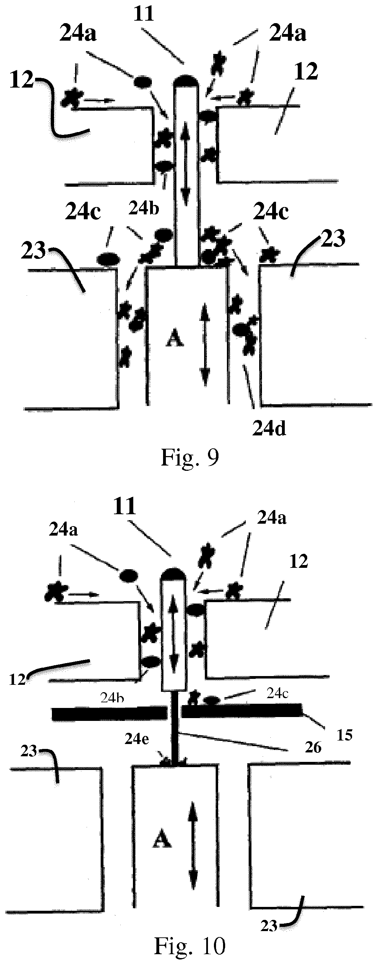

Fig. 9 zeigt den rein geometrischen Hintergrund der Verschmutzungs-Situation. Aus Gründen der Übersichtlichkeit wird das Prinzip skizziert, es besteht also keine Maßstabs-Treue. Der senkrecht bewegte taktile Stift 21 gleitet in der Stiftplatte 12, angetrieben vom darunter liegenden Aktuator A, dessen raumfester Aufbau mit 23 bezeichnet ist. Ob es sich bei A um den eigentlichen Aktuator handelt (z.B. ein Piezo-Element) oder um die Funktionsfläche einer am Aktuator befestigten mechanischen Einheit (z.B. ein Kniehebel-Getriebe) ist für die folgende Betrachtung belanglos. Die senkrechte Linearbewegung beider Einheiten ist durch den Doppelpfeil symbolisiert.

Die allgegenwärtigen Verschmutzungspartikel 24a dringen in den Innenraum des Displays 54 ein, wie durch die kleinen Pfeile an den Partikeln angedeutet. Sie setzen sich entweder direkt 24b im Raum zwischen Stift 21 und Stiftplatte 12 fest, wo sie die Stiftbewegung sofort behindern, oder gelangen im Laufe der Betriebszeit des Displays 54 sogar in die Umgebung des Funktionsbereiches des Aktuators A, um sich dort zunächst anzuhäufen, siehe 24c. Von dieser Stelle aus können sie später den Aktuator selbst massiv stören, siehe 24e.

Durch die Erfindung ist es nun möglich, sowohl das Größen-Spektrum als auch die Menge der in der Umgebung des Aktuators A abgelagerten Schmutz-Partikel 24c zu minimieren. Dies wird erreicht durch Anbringung der in Fig. 10 gezeigten Schmutzblende 25 in Verbindung mit dem Einsatz eines Betätigungs-Stabes 26 für den Stift 21 , dessen Durchmesser geringer ist, als der des taktilen Stifts 11. Die Schmutzblende 25 kann dabei als massives Teil (z.B. als mit Löchern versehene Blechplatte) aber auch als flexible Folie, die den Betätigungs-Stab 26 dicht umschließt, ausgeführt sein. Aufgrund des - im Vergleich zum Stift 21 - geringeren Durchmessers des Betätigungs-Stabes 26 treten bei der Folienlösung selbst bei dichter, manschettenartiger Umschließung deutlich geringere Hemmkräfte für die senkrechte Bewegung auf, weil die reibenden Kontaktflächen deutlich kleiner sind als bei Umschließung des eigentlichen Stifts.

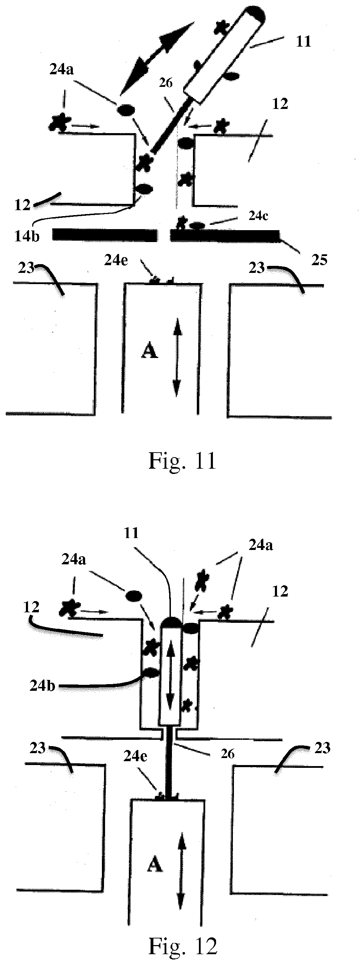

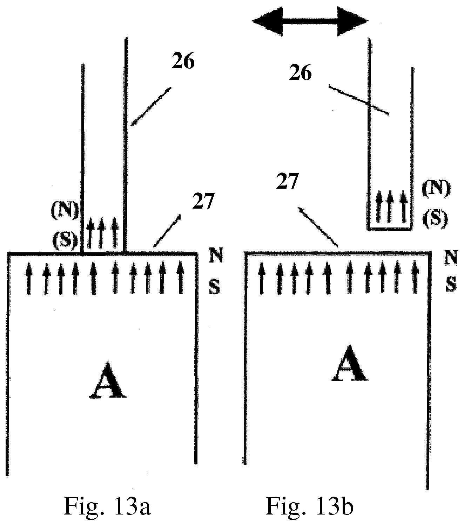

Zur Entfernung des sich im Laufe der Betriebszeit angesammelten Schmutzpartikel kann der einzelne taktile Stift 21 mit seinem Betätigungs-Stab 26 leicht von außen durch den Benutzer entfernt werden, wie in Fig. 11 durch den gekrümmten Pfeil gezeigt. Die mechanische Ankopplung des Betätigungs-Stabes 26 an den Aktuator A erfolgt vorzugsweise durch magnetische Kopplung der beiden. Dabei ist der Betätigungs-Stab 26 selbst weichmagnetisch. Der Aktuator A selbst ist dagegen als kompletter Hartmagnet ausgebildet, wie in Fig. 13a gezeigt: Der Betätigung-Stab 26 ist hier magnetisch in lateral gesehen mittiger Position an die Stirnfläche 27 des Aktuators A gekoppelt. Entscheidend ist die für den Benutzer selbst bestehende Möglichkeit, den einzelnen Stift 21 durch Eingriff von außen leicht vom Aktuator A trennen zu können, um ihn später nach der Reinigung wieder problemlos zu platzieren.

Dieses Vorgehen ist prinzipiell auch durch mechanische Koppel-Maßnahmen zwischen Betätigungs-Stab 26 und Aktuator A möglich (z.B. Klick-Verbindungen, Dreh-Arretierungen). Allerdings ist der gesteigerte konstruktive Aufwand für mechanische Lösungen vor allem wegen der Fertigungs-Probleme im Zusammenhang mit der Pass-Genauigkeit zwischen der Stiftplatte 12, Betätigungs-Stab 26 und Aktuator A sehr kritisch zu sehen: Eine Selbstjustierung der Kontakt- Position des weichmagnetischen Betätigungs-Stifts 26 auf der Stirnfläche 27 des hartmagnetischen Aktuators A, wie bei der magnetischen Lösung (magnetische Ankopplung) in Fig. 13b kurz vor dem Ankoppeln gezeigt, findet bei mechanischen Verbindungen nämlich nicht statt. Der Doppelpfeil verdeutlicht den lateralen Spielraum beim Einsetzen der Stifteinheit 11. Aus Gründen der Übersichtlichkeit ist hier der fest mit dem Betätigungs-Stab 26 verbundene taktile Stift 11 nicht eingezeichnet.

In Fig. 12 ist eine Ausführungsform der Erfindung gezeigt, bei der die Schmutzblende 25 der Fig. 10 durch geeignete geometrische Ausgestaltung der Durchbrüche konstruktiv direkt in die Stift-Platte 12 selbst integriert ist.

Speziell die magnetisch-mechanische Selbstjustierung der Stifteinheit ist in Fig. Fig. 13a und Fig. 13b dargestellt. Das weichmagnetische Material des Betätigungs-Stabes 26 reagiert auf die Präsenz des räumlich nahen Hartmagneten durch Ausbildung induzierter Magnetpole, wie durch die Bezeichnung N und S hervorgehoben. Diese Anordnung erlaubt es, bei der geometrischen Passung des Stifts 11 in der Führung der Lochplatte 12 - siehe hier z.B. Fig. 12 - bis an die Grenzen der Teile-Toleranzen zu gehen, so dass um den Stift 21 herum dann ein sehr enger Spalt entsteht, der die Wahrscheinlichkeit des Eindringens von Schmutz-Partikeln 24a in den Innenraum des Displays 54 optimal senkt.

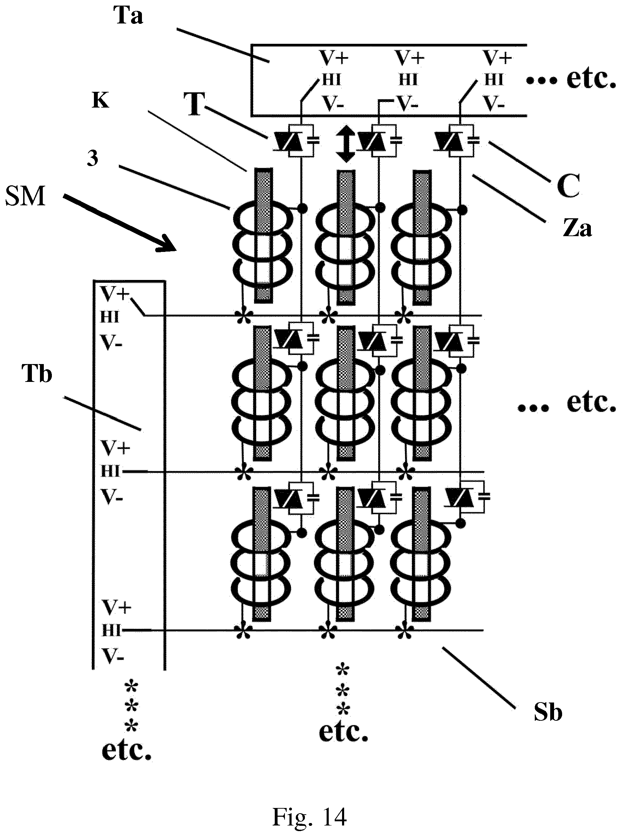

Fig. 14 zeigt den prinzipiellen Aufbau und die Beschaltung einer Spulen-Matrix für die aktive Aktuator-Funktion. Die Spulen sind mit 3, die beweglichen Kerne mit K bezeichnet. Die für die korrekte elektrische Funktion notwendigen Bauteile sind mit T (für TRIAC) und C (für Kondensator) bezeichnet. Aus Gründen der Übersichtlichkeit ist nur eine 3x3 Anordnung detailliert ausgeführt und die detaillierte Ansteuerung des TRIAC- Gates nicht eingezeichnet. Die Anordnung lässt sich aber beliebig erweitern, wie durch die Punkte/ Sterne und die Beschriftung "etc." angedeutet.

Die Adress-Leitungen für die horizontale Zeilen-Versorgung sind mit Za bezeichnet, diejenigen für die vertikale Spalten-Versorgung mit Sb. Der jeweilige Nummerierungs-Index Hi bzw. Vi ist prinzipiell unbegrenzt. Die Vertikal- und Horizontal - Leitungen tragen den Strom für die Spulen-Bestromung. Die Treiber-Endstufen (bezeichnet mit Ta und Tb) können auf hohes Potential (V+), niedriges Potential (V-), oder auf einen hochohmigen "high impedance" Zustand HI gesetzt werden. Soll z.B. die zweite Spule oben bestromt werden, wird die Adressleitung V1 auf (V+) gesetzt, gleichzeitig die Adressleitung H2 auf (V-). Alle anderen mit "i" indizierten Vi und Hi- Leitungen nehmen den hochohmigen Ausgangszustand an. Somit wird im gezeigten Beispiel nur die Spule mit den Koordinaten (2; 1) bestromt. Der Aktuator A reagiert mit der Bewegung seines hartmagnetischen Kerns K, wie durch den Doppel-Pfeil angedeutet. Alle übrigen Spulen der Matrix "sehen" keine Potentialdifferenz an ihren Endanschlüssen, sind also mechanisch passiv. Soll der Spulenstrom in umgekehrter Richtung wirken, die Aktuatorbewegung in umgekehrter Richtung verlaufen, werden die angelegten Spannungen der ausgewählten Spule zwischen der jeweiligen H- und V- Leitung vertauscht.

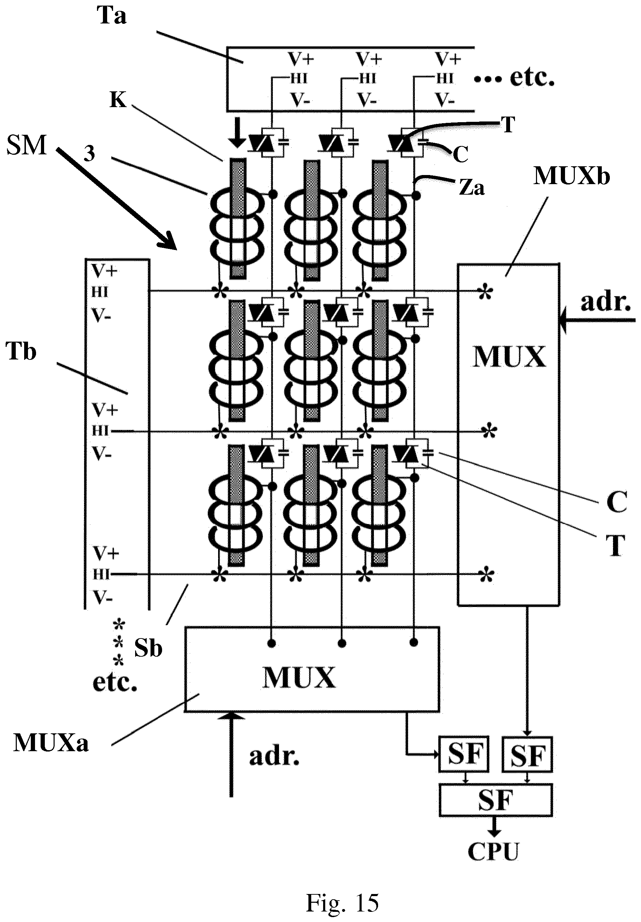

Fig. 15 zeigt die Beschaltung der Spulen-Matrix SM im hochohmigen Eingabezustand der Vorrichtung. Die Treiber Ta, Tb sämtlicher Horizontal und Vertikal- Leitungen Hi und Vi sind im hochohmigen HI- Zustand. Wird der bewegliche hartmagnetische Kern K einer Spule 3 bewegt (die Druckbewegung des Fingers ist durch den nach unten gerichteten Pfeil dargestellt) erzeugt er eine Induktionsspannung in der Spule. Die spezifischen Hi und Li- Leitungen (gezeigt ist jetzt der Fall mit den Koordinaten (1; 1)) liegen dann auf einem der magnetischen Flussänderung entsprechenden elektrischen Potential. Aus der magnetischen Datenspeicherung bereits bekannte elektrische Schaltungen zur optimalen zeitlichen Signalformung und Signal-Erkennung induktiver Spannungsverläufe (dies können z.B. geeignete Dioden / Kondensator Kombinationen, Spitzenwert-Detektoren, Integratoren und Schwellen-Diskriminatoren sein) sind als Blöcke "SF" eingezeichnet. Aus Gründen der Übersichtlichkeit der Darstellung sind diese aber nicht detailliert mit ihrer speziellen Funktionen dargestellt.

Die Adresse adr. des betroffenen Multiplexers - Eingangs im Falle eines bestimmten gerade manuell betätigten Aktuator-Kerns K kann also identifiziert werden und z.B. über die Auslösung eines Interrupts zeitlich asynchron an eine Kontrolleinheit CPU übermittelt werden. Es ist aber auch möglich, dass die Kontrolleinheit CPU selbst die Multiplexer MUXa, MUXb synchron adressiert und die Multiplexer-Eingänge dann sukzessive am Ausgang des jeweiligen Multiplexers MUXa, MUXb abfragt. In der konkreten Ausführung kann es signaltechnisch auch vorteilhaft sein, die Signal-Formung SF bereits vor den Eingängen der Multiplexer MUXa, MUXb durchzuführen, was aber den Nachteil von höherem Bauteile-Einsatz mit sich bringt. In der praktischen Realisation kann es zudem vorteilhaft sein, mehrere Aktuatoren parallel zu verschalten, oder auch nur eine bestimmte reduzierte Anzahl von Aktuatoren A (z. B. jeden vierten in einer Zeile und/oder Spalte) für die passive Detektions-Funktion der Spulenmatrix SM heran zu ziehen.

Die Fig. 16 bis 22 zeigen eine Anwendung der Erfindung als intuitiv nutzbare optisch-taktile Sehhilfe. Fig. 16 zeigt die Block-Anordnung der intuitiven Sehhilfe. Eine digitale Kamera 51 kann dabei als Voll-Flächen-Kamera oder Zeilen-Kamera ("Scanner") ausgestaltet sein. Die Bildsignale 52a werden einer Daten-Verarbeitungs-Vorrichtung 53 zugeführt. Dabei kann es sich um einen Personal-Computer, einen digitalen Signalprozessor, eine CPU oder um einen Mikroprozessor handeln. Die Software der Daten-Verarbeitungs-Vorrichtung 53 erfüllt die Anforderungen einer Daten-Reduktion mit Bild-Erkennung. Die Software teilt das Bild auch in Bereiche unterschiedlicher taktiler Punkt-Auflösung und verschieden schneller taktiler Bild-Auffrischung auf und leitet die entsprechenden Bildsignale 52b an ein taktiles Display 54, nachfolgend auch taktile Vorrichtung 54 genannt, weiter. Der Vorteil dieser Aufspaltungs-Maßnahme besteht darin, dass der Blinde z.B. den Außenbereich eines taktilen Bildes sehr schnell abtasten kann, ohne durch Detaildarstellungen an anderer Stelle von wichtigen Informationen abgelenkt zu werden. Man denke hier z.B. an ein plötzliches senkrechtes Kreuzen des Weges durch eine schnell laufende Person. Hier ist die genaue Kontur der Person oder gar die Information Mann oder Frau zunächst völlig unwichtig, die Tatsache des plötzlichen Erscheinens eines Hindernisses muss schnell mit den Fingern erfühlbar sein. Der in der Darstellung skizzierte Unterschied zwischen Bildsignal 52a und Signal 52b bezüglich Impulsdichte und Impulszahl soll verdeutlichen, dass es sich beim Signal 52b um ein Datenreduziertes Signal im Vergleich zur ursprünglichen Bildquelle, d.h. der digitalen Kamera 51 handelt.

In Fig. 16 ist die taktile Vorrichtung (Display 54) als Flächendisplay mit konstantem Rasterabstand der taktilen Punkte dargestellt. Dagegen wird in Fig. 17 eine Ausführung des taktilen Displays 54 mit geometrisch nicht einheitlichem Punktraster gezeigt. Vorzugsweise ist die Anordnung der verschieden auflösenden Rasterflächen zentral-symmetrisch zur Bildmitte, um in etwa die Funktion des "fovealen Sehens" des menschlichen Gesichtssinns taktil zu simulieren.

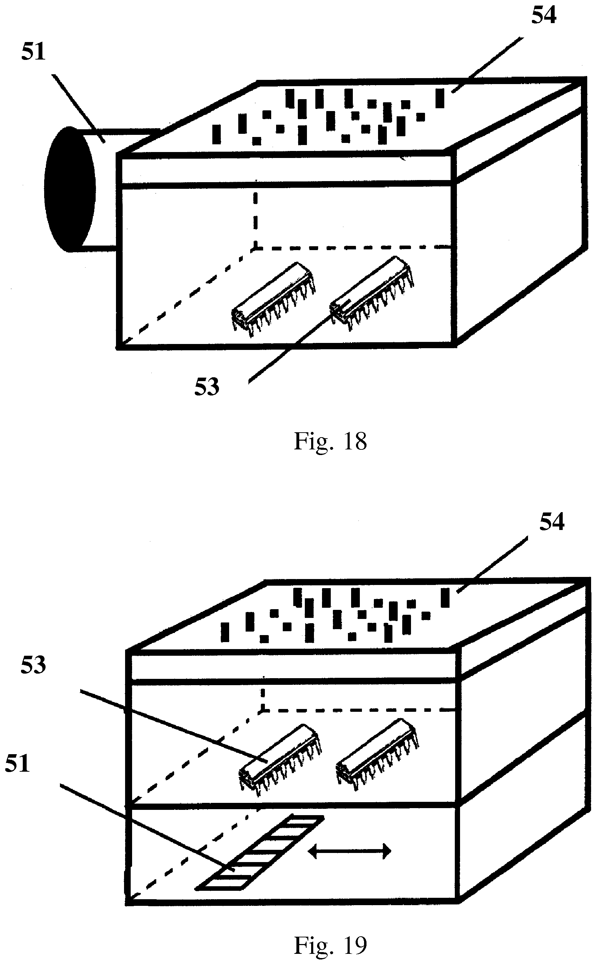

Fig. 18 zeigt eine mögliche Ausführungsform, bei der Kamera 51, Datenverarbeitung 53 und taktile Vorrichtung/Display 54 in einem Gehäuse angeordnet sind. Die unterschiedlichen Höhen der einzelnen taktilen Positionen des Displays 54 zeigen schematisch jeweils einen gesetzt /ungesetzt -Zustand an. Das Gehäuse kann prinzipiell sowohl mobil als auch stationär eingesetzt werden. Die stationäre Version mit einer Kamera 51 mit Flächen-Sensor ist z.B. für den Einbau in den Schreibtisch eines blinden Sachbearbeiters denkbar, der häufig mit ihm gegenübersitzenden bzw. stehenden Personen kommunizieren muss.

Dagegen zeigt Fig. 19 eine mögliche Variante mit eingebauter Zeilenkamera / Scanner 51 zum optisch-taktilen Abtasten von flächigen grafischen Vorlagen. Der Doppelpfeil symbolisiert den mechanischen Verfahrweg der Zeilen-Kamera / Scanner 51. Aus Gründen der Übersichtlichkeit sind Beleuchtungseinrichtungen, mechanische Führungen und elektrische Verbindungen zwischen den einzelnen Komponenten nicht eingezeichnet. Diese Zeilen-Scan-Variante ist natürlich auch als mobiles Gerät ausführbar.

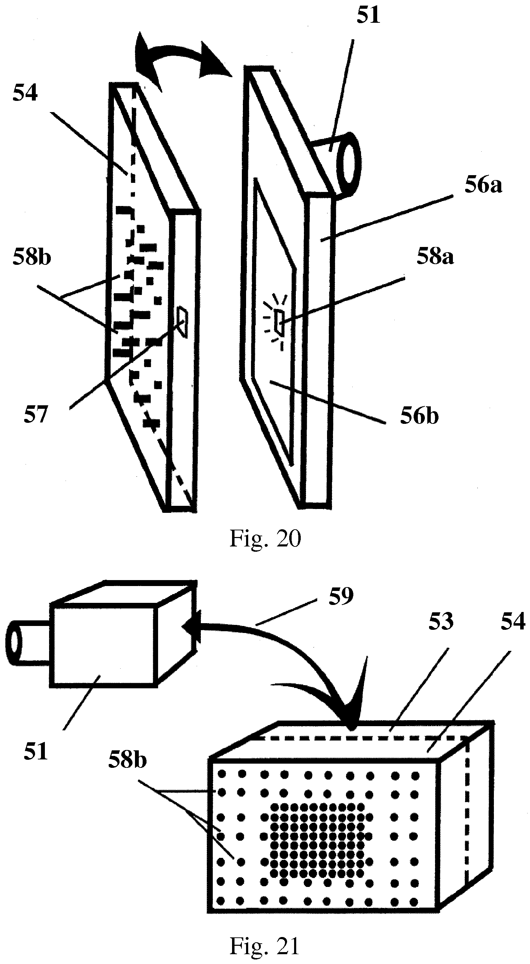

Fig. 20 zeigt eine spezielle mobile Variante, die Hard- und Software eines z.B. bereits beim Nutzer vorhandenen intelligenten mobilen Telefons, "Smartphone" 56a mit Bildschirm 56b und eingebauter Kamera 51 nutzt. Hier wird das taktile Display 54 nur auf den vorhandenen Bildschirm 56b des Smartphones 56a aufgesetzt, wie durch den gebogenen Doppelpfeil angedeutet. Diese Variante kann dabei so ausgestaltet werden, dass das taktile Display 54 auch jederzeit durch den Nutzer selbst aufgesetzt bzw. wieder entfernt werden kann. Die Nutzung eines Smartphones 56a ist besonders vorteilhaft, weil durch geeignete Software-Programme ("Apps") sowohl die vorhandene Hardware (Zentralprozessor) zur Datenverarbeitung, als auch der optische Bildschirm des Smartphones direkt als optisches Ausgabegerat für die im taktilen Display 54 darzustellenden Bildmuster 58b genutzt werden können. In der gezeigten Ausführungsform der Fig. 20 wird das taktile Display 54 ohne weiteren Verdrahtungsaufwand, quasi in einem "Kontaktverfahren" angesteuert, was über opto-elektronische Bauteile 57 in der taktilen Vorrichtung geschieht, die das optische Bildschirmmuster 58a abtasten.

Aus Gründen der Übersichtlichkeit ist in der Abbildung nur der optische Empfänger 57 für ein einzelnes aktives Sende-Bildelement des Smartphone-Displays 56b dargestellt. Die optoelektronische Verbindung ist natürlich nicht zwingend: Es kann zur Herstellung des Signal-Austausches - gegebenenfalls auch von Spannungsversorgungen - durchaus der im Smartphone bereits vorhandene Verbindungsstecker für Datenaustausch / Stromversorgung herangezogen werden.

Fig. 21 zeigt die Seitenansicht der zusammengesetzten Anordnung entsprechend Fig. 20. Deutlich wird erkennbar, wie flach und kompakt die optisch - taktile Sehhilfe in dieser mobilen Ausführungsform gestaltet werden kann. Die gesetzten / ungesetzten taktilen Stifte für das darzustellende Bildmusters 58b sind nur zur Verdeutlichung ihrer Anzeigefunktion bezüglich ihrer Höhe rein schematisch dargestellt: In der praktischen Ausführung werden die nicht gesetzten Stifte z. B. nicht über die linke Oberfläche des Displays 54 herausragen.

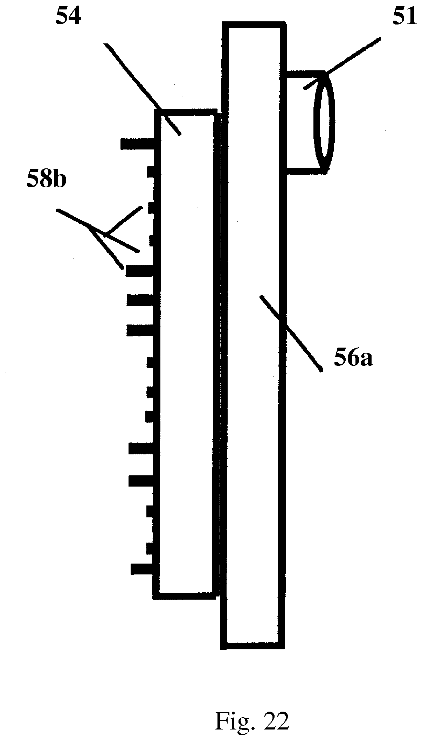

Natürlich kann an Stelle eines vorhandenen Smartphones mit Kamera 56a, 56b, 51 auch eine spezielle Kamera - vorzugsweise mit extremer Weitwinkel-Optik ausgestattet - eingesetzt werden. Demzufolge ist das Telefon 56a und dessen Bildschirm 56b dann sinngemäß durch ein Gehäuse mit eingebauter Datenverarbeitungs-Einheit 53 und Energieversorgung zu ersetzen. Diese zeigt Fig. 22.

Dargestellt ist die Kamera 51 neben dem taktilen Display (Ausgabeeinheit) 54 mit der in das Gehäuse des Displays 54 integrierten Daten-Verarbeitungs-Vorrichtung 53. Die Kamera 51 kann dabei z.B. an der Kleidung etwa in Hemdkragen-Höhe befestigt werden, oder auch in einer brillen- ähnlichen Befestigungsweise am Kopf getragen werden. Das taktile Display 54 kann für den bequemen Gebrauch z.B. mittels eines Gurtes am Oberschenkel getragen werden, oder diskret verborgen in einer Hosen- oder Jacken-Tasche mitgeführt werden.

In der dargestellten Ausführung beherbergt das Gehäuse des taktilen Displays 54 dann auch sämtliche weiteren Vorrichtungen zur Datenverarbeitung 53. Die eingezeichnete Verbindungsleitung 59 zwischen Kamera 51 und dem z.B. in der Hosentasche getragenen Teilen 53 und 54 kann zwar prinzipiell als Kabel-Verbindung ausgeführt sein, zum bequemeren Gebrauch der Vorrichtung ist jedoch eine drahtlose Datenverbindung vorzuziehen. Je nach Aspekten bezüglich Daten- und Abhör-Sicherheit der gesamten Vorrichtung sowie der Spannungsversorgung der Kamera 51 wird man eine der beiden alternativen Lösungen verwirklichen.

### Bezugszeichenliste:

- 1: Stab (linear frei beweglich, hartmagnetisch)
- 1a: Hilfs-Pol (obere Ende des Stabes 1)
- 1b: Haupt-Pol (tellerförmig)
- 2: Hülse (hartmagnetisch)
- 2a: kragenförmige Erweiterung (der Hülse 2)
- 3: Spule
- 4: Streufeld (des Haupt-Pols 1b)
- 4cd: Streufeld (des Haupt-Pols 1b, schwächer)
- 11: Stift
- 12: Stift-Platte
- 13a: Aktuator-Ebene
- 13b: Aktuator-Ebene
- 13c: Aktuator-Ebene
- 13d: Aktuator-Ebene
- 14a: verjüngter unterer Teil (taktiler Stift 11)
- 14b: verjüngter unterer Teil (taktiler Stift 11)
- 14c: verjüngter unterer Teil (taktiler Stift 11)
- 14d: verjüngter unterer Teil (taktiler Stift 11)
- 15: Durchgangsbohrung (für verjüngtes Betätigungs-Teil 14b)
- 16: Schaltkreis-Ebene
- 23: Aufbau (des Aktuators A)
- 24a: Verschmutzungspartikel
- 24b: Verschmutzungspartikel
- 24c: Verschmutzungspartikel
- 24e: Verschmutzungspartikel
- 25: Schmutzblende
- 26: Betätigungs-Stab
- 27: Stirnfläche
- 51: digitale Kamera
- 52a: Bildsignale (der digitalen Kamera 51)
- 52b: Bildsignale (der digitalen Kamera 51)
- 53: Daten-Verarbeitungs-Vorrichtung (CPU, Signalprozessor u.a.)
- 54: taktiles Display (Ein-, Ausgabeeinheit)
- 56a: Smartphone
- 56b: Bildschirm (des Smartphone 56a)
- 57: opto-elektronisches Bauteil (optischer Empfänger)
- 58a: Bildschirmmuster
- 58b: Bildschirmmuster
- 59: Verbindungsleitung
- A: magnetisch bistabiler axialsymmetrischer Aktuator (Montageposition)
- adr.: Adressleitung (Multiplexer- Eingang)
- C: Kondensator
- CPU: Kontroll-Einheit
- d: Rastermaß
- h: Überstand (des Hilfspols 1a)
- H1: Dicke (des Hauptpols 1b)
- Hi: Horizontal - Leitung (Strom für die Spulen-Bestromung)
- HI: hochohmiger Zustand
- K: Kern (der Spule 3)
- MUXa: Multiplexer
- MUXb: Multiplexer
- N: Nordpol
- S: Südpol
- SM: Schaltmatrix
- Sp: Adress-Leitung (vertikale Spalte)
- SF: Block (Schaltung zur zeitlichen Signalformung und Signal-Erkennung)
- T: Triac
- Ta: Treiber-Endstufe
- Tb: Treiber-Endstufe
- Vi: Vertikal-Leitung (Strom für die Spulen-Bestromung)
- W1: räumliche Ausdehnung (des Streufelds 4)
- w2: räumliche Ausdehnung (des Streufelds 4cd)
- Za: Adress-Leitung (horizontale Zeile)

## Patentansprüche

1. Taktiles Display (54) mit einer Stift-Platte (12), einer Schaltmatrix (SM) und mit einem magnetisch bistabilen axialsymmetrischen linear-Aktuator (A) für taktile Anwendungen mit einem hartmagnetischen Stab (1), welcher an einem Ende tellerartig (1b) erweitert ist und mit einer auf einer Leiterplatte angeordneten Spule (3), in welcher der Stab (1) frei in axialer Richtung beweglich ist, **dadurch gekennzeichnet, dass** der Stab (1) des Aktuators (A) aus einem Material mit sehr hoher Koerzitivfeldstärke besteht, dass dieser axial von einer höchstens gleich langen, hartmagnetischen Hülse (2) mit deutlich geringerer Koerzitivfeldstärke umschlossen und in axialer Richtung frei beweglich ist, dass der Stellweg des Stabs (1) durch dessen Überlänge (h) im Vergleich zur Länge der hartmagnetischen Hülse (2) festgelegt ist, derart, dass sich an einem Ende des Stabs (1) ein Hilfs-Pol (1a) und am gegenüberliegenden Ende ein tellerartiger Haupt-Pol (1b) ausbilden kann, und dass das axiale Magnetfeld der Spule (3), welche Stab (1) und Hülse (2) gemeinsam umschließt, nur das Material der Hülse (2) nicht aber dasjenige des Stabes (1) in der magnetischen Polarität umschalten kann.

2. Display nach Anspruch 1, **dadurch gekennzeichnet, dass** der Haupt-Pol (1b) die Kontur eines Kegels oder eines Kegel-Stumpfes oder eines Kegel-Stumpfes mit scheibenförmiger Grundfläche als tellerartige Erweiterung hat, wobei die Höhe (H1) des Kegels oder des Kegel-Stumpfes oder die Höhe (H2) der tellerartigen Erweiterung des Stabes (1) bewirken, dass das Streufeld (4, 4cd) des tellerartigen Haupt-Pols (1b) in der "unten"- Position des Aktuators nicht mehr in der Lage ist, die Magnetisierung der Hülse (2) umzuschalten, wobei ein Ende der hartmagnetischen Hülse (2) eine kragenförmige Erweiterung (2a) aufweist, deren Durchmesser derart dimensioniert ist, dass die kragenförmige Erweiterung (2a) die angrenzende Stirnfläche der umschließenden Spule (3) zumindest teilweise, maximal 95 % des Durchmesser-Wertes des tellerartigen Haupt-Pols (1b) des hartmagnetischen Stabes (1) überdeckt und wobei das Verhältnis der besagten Koerzitivfeldstärken der beiden hartmagnetischen Materialien von Stab (1) und Hülse (2) mindestens den Wert 3:1 erreicht.

3. Display nach einem oder mehreren der Ansprüche 1 bis 2, **dadurch gekennzeichnet, dass** die Aktuatoren (A) in mindestens zwei und maximal vier zu der Stift-Platte (12) des Displays (54) parallel verlaufenden und senkrecht gestaffelten Ebenen (13a, 13b, 13c, 13d) derart angeordnet sind, dass die lateralen gegenseitigen Abstände der Aktuatoren (A) in einer Ebene größer sind, als das für die Stift-Platte (12) vorgegebene Rastermaß (d).

4. Display nach einem oder mehreren der Ansprüche 1 bis 3, **dadurch gekennzeichnet, dass** ein taktile Stift (11) nur im Bereich der Führungsflächen der Stift-Platte (12) seinen maximalen Nenndurchmesser hat und sich unterhalb der Stiftplatte (12) im Durchmesser (14a, 14b, 14c, 14d) verjüngt und dass die Aktuator-Ebenen (13a, 13b, 13c, 13d) mit engen Durchgangsbohrungen genau im Rastermaß der Stift-Platte (12) versehen sind.

5. Display nach einem oder mehreren der Ansprüche 1 bis 4, **dadurch gekennzeichnet, dass** bei identischen Längen der taktilen Stifte (11) mit NennDurchmesser mindestens zwei und höchstens vier Typen von im Vergleich zum Stift-Nenn-Durchmesser verjüngter Betätigungs-Stäbe mit zwei bis maximal 4 unterschiedlichen Längen eingesetzt werden.

6. Display nach einem oder mehreren der Ansprüche 1 bis 5, **dadurch gekennzeichnet, dass** die Aktuator-Ebenen(13a, 13b, 13c, 13d) als elektrische Leiterplatten oder als mehrlagige Leiterplatte ausgeführt ist und dass als unterer Abschluss des Displays (54) eine oder mehrere zusätzliche Leiterplatten mit elektrischen Bauteilern (IC' s) angebracht sind.

7. Display nach einem oder mehreren der Ansprüche 1 bis 6, **dadurch gekennzeichnet, dass** zum zuverlässigen Betrieb der beweglicher Taststifte (11) unter der Ebene der Stift-Platte (12) eine mechanische Schmutzblende (25) angeordnet ist, die durch geometrische Abschattung das Eindringen von Schmutzpartikeln (24a) in den Innenraum minimiert.

8. Display nach einem oder mehreren der Ansprüche 1 bis 7, **dadurch gekennzeichnet, dass** der taktile Stift (11) an einem Ende fest mit einem Betätigungs-Stab (26) fest verbunden ist, dessen Durchmesser höchstens die Hälfte des Durchmessers des taktilen Stifts (11) beträgt und dass der dünne Betätigungs-Stab (26) aus weichmagnetischem Material ist und mittels magnetischer Kräfte, mit der Stirnfläche (27) des hartmagnetischen Aktuators (A) gekoppelt ist, wobei eine Selbstjustierung der Kontakt- Position des weichmagnetischen Betätigungs-Stabs (26) auf der Stirnfläche (27) des hartmagnetischen Aktuators (A) kurz vor dem Ankoppeln erfolgt.

9. Display nach einem oder mehreren der Ansprüche 1 bis 8, **dadurch gekennzeichnet, dass** die zur Ansteuerung von Zeilen-und Spaltenweise verbundener Spulen (3) vorgesehene Schaltmatrix (SM) Spulen (3) mit im Inneren jeweils einen hartmagnetischen axial beweglichen Kern (K) aufweist, so dass die einzelne Spule (3) sowohl passiv als Sensor über die elektromagnetische Induktion durch mechanische Verschiebung des hartmagnetischen Kerns, als auch mechanisch aktiv als Aktuator mittels gezielter Bestromung der Spule (3) fungieren kann.

10. Display nach einem oder mehreren der Ansprüche 1 bis 9, **dadurch gekennzeichnet, dass** die Zeilen- und Spaltenmäßige Bestromung der Spulen (3) durch elektrisch bipolare Leistungs-Endstufen(Ta, Tb) erfolgt, die zusätzlich über einen dritten, hochohmigen Schaltzustand (HI) verfügen und dass im Falle des hochohmigen Schaltzustandes (HI) der Schaltmatrix (SM) zusätzlich ein oder mehrere analoge Multiplex-Schalter (MUXa, MUXb) mit den Spalten-(Sp) und Zeilenleitungen (Za) der Schaltmatrix (SM) elektrisch verbunden sind, und es so ermöglichen, an einem Analog-Ausgang des Multiplex-Schalters (MUXa, MUXb) die Differenz-Spannung zwischen ausgewählten Spalten- und Zeilenleitungen bereitzustellen.

11. Display nach einem oder mehreren der Ansprüche 1 bis 10, **dadurch gekennzeichnet, dass** die Zuleitungen zum Eingang des analogen Multiplex-Schalters (MUXa, MUXb) jeweils mit einer Signalformung (SF) versehen sind, die das induzierte Spannungssignal für die weitere digitale Verarbeitung und Nutzung konditionieren und dass der Ausgang des analogen Multiplex-Schalters (MUXa, MUXb) mit einer Signalformung (SF) verbunden ist, welche das induzierte Spannungssignal für die weitere digitale Verarbeitung und Nutzung konditioniert.

12. Display nach einem oder mehreren der Ansprüche 1 bis 11, **dadurch gekennzeichnet, dass** das Signal-geformte Ausgangssignal des Multiplexers (MUXa, MUXb) bei einer nachgeschalteten Kontroll-Einheit (CPU) einen zum Takt der Kontroll-Einheit (CPU) asynchronen Interrupt auslösen kann und dass die zum Zeitpunkt des asynchronen Interrupts anliegende Zeilen- und Spaltenadressen des analogen Multiplex-Schalters (MUXa, MUXb) an die Kontroll-Einheit (CPU) transferiert werden.

13. Display nach einem oder mehreren der Ansprüche 1 bis 12, **dadurch gekennzeichnet, dass** die Kontroll-Einheit (CPU) selbst die Zeilen- und Spaltenadressen des analogen Multiplex-Schalters (MUXa, MUXb) synchron generiert.

14. Verwendung eines taktilen Displays (54) nach einem oder mehreren der Ansprüche 1 bis 13 für eine intuitiv nutzbare optisch-taktile Sehhilfe zur Substitution des menschlichen Seh-Sinns, **dadurch gekennzeichnet, dass** die primäre optische Bildinformation einer Kamera (51), welche als Flächen-Sensor oder Zeilen-Sensor ausgestaltet ist, nach Durchlaufen einer software-mäßigen Bildbearbeitung zwecks Datenreduktion und Bilderkennung einem großflächigen taktilen Display als Anzeigevorrichtung (54) zugeführt wird, wobei die Zahl der taktilen Rasterpunkte mindestens 50 x 80 = 400 beträgt und dass zwischen der Kamera (51) und der taktilen Anzeigevorrichtung (54) eine Vorrichtung zur digitalen Daten-Verarbeitung (53) geschaltet ist, wobei das Bildfeld der Kamera (51) in mindestens zwei Bereiche aufgeteilt wird, die das primäre optische Bild mit unterschiedlicher taktiler Auflösung darstellen und wobei die Bild-Auffrischung der unterschiedlichen taktilen Bereiche in jeweils verschiedenen Zeitabständen (Frequenz) erfolgt.

15. System aus optisch-taktiler Sehhilfe und einem taktilen Display (54) nach einem der Ansprüche 1 bis 13 und verwendet wie in Anspruch 14, **dadurch gekennzeichnet, dass** die Realisation der unterschiedlichen taktilen Auflösung wahlweise rein Softwaremäßig über die digitale Ansteuerung des taktilen Displays (54) mit festem Punktraster erfolgen kann oder bereits durch die geometrisch-mechanische Anordnung des taktilen Punktrasters des Displays (54) vorgegeben werden kann und dass im System sowohl die Kamerafunktion als auch die Vorrichtungen zur Verarbeitung der optischen Bilddaten (53) durch ein Mobiltelefon mit integrierter Kamera (51) und digitaler Daten-Verarbeitungs-Vorrichtung (53) bereitgestellt werden kann.

## Claims

1. Tactile display (54) with a pin plate (12), a switching matrix (SM) and with a magnetically bistable axially symmetrical linear actuator (A) for tactile applications with a hard magnetic rod (1) which is plate-like at one end (1b) extended and arranged on a circuit board with a coil (3) in which the rod (1) is freely movable in the axial direction, **characterized in that** the rod (1) of the actuator (A) is made of a material with a very high coercive field strength that rod (1) is surrounded axially by a hard-magnetic sleeve (2) of the same length with a significantly lower coercive field strength and is freely movable in the axial direction, that the travel of the rod (1) is increased by its excess length (h) compared to the length of the hard-magnetic sleeve (2) is set such that at one end of the rod (1) an auxiliary pole (la) and at the opposite end a plate-like main pole (1b) can form, and that the axial magnetic field of the coil (3), which encloses rod (1) and sleeve (2) together, only the material of the sleeve (2) but not that of the rod (1) can switch in the magnetic polarity.

2. Display according to claim 1, **characterized in that** the main pole (1b) has the contour of a cone or a truncated cone or a truncated cone with a disc-shaped base as a plate-like extension, the height (HI) of the cone or of the truncated cone or the height (H2) of the plate-like expansion of the rod (I) mean that the stray field (4, 4cd) of the plate-like main pole (1b) is no longer able to in the "down" position of the actuator to switch over the magnetization of the sleeve (2), whereby one end of the hard-magnetic sleeve (2) having a collar-shaped extension (2a), the diameter of which is dimensioned in such a way that the collar-shaped extension (2a) touches the adjoining end face of the enclosing coil (3) at least partially, at most 95% of the diameter value of the plate-like main pole (1b) of the hard-magnetic rod (1) and wherein the ratio of said coercive field strengths of the two hard-magnetic materials of the rod (1) and sleeve (2) is at least 3:1.

3. Display according to one or more of claims 1 to 2, **characterized in that** the actuators (A) are arranged in at least two and at most four, parallel and vertically staggered planes (13a, 13b, 13c, 13d) of the display (54) and are arranged in such a way that the lateral mutual distances between the actuators (A) in one plane are greater than the grid dimension (d) specified for the pin plate (12).

4. Display according to one or more of claims 1 to 3, **characterized in that** a tactile pin (11) has its maximum nominal diameter only in the region of the guide surfaces of the pin plate (12) and below the pin plate (12) tapers in diameter (14a, 14b, 14c, 14d) and that the actuator planes (13a, 13b, 13c, 13d) are provided with narrow through-holes exactly in the grid of the pin plate (12).

5. Display according to one or more of claims 1 to 4, **characterized in that** with identical lengths of the tactile pins (11) with a nominal diameter of at least two and at most four types, two to a maximum of 4 different lengths compared to the pin nominal diameter tapered actuating rods can be used.

6. Display according to one or more of claims 1 to 5, **characterized in that** the actuator levels (13a, 13b, 13c, 13d) are designed as an electrical circuit board or as a multi-layer circuit board and that as the lower end of the display (54) one or several additional printed circuit boards with electrical components (IC s) are attached.

7. Display according to one or more of claims 1 to 6, **characterized in that,** for reliable operation of the movable feeler pins (11), a mechanical dirt screen (25) is arranged below the plane of the pin plate (12), which by geometric shadowing minimized penetration of dirt particles (24a) in the interior.

8. Display according to one or more of claims 1 to 7, **characterized in that** the tactile pin (11) is firmly connected at one end to an actuating rod (26) whose diameter is at most half the diameter of the tactile pin ( 11) and that the thin actuating rod (26) is made of soft-magnetic material and is coupled to the end face (27) of the hard-magnetic actuator (A) by means of magnetic forces, whereby a self-adjustment of the contact position of the soft-magnetic actuating rod ( 26) on the end face (27) of the hard-magnetic actuator (A) occurs shortly before coupling.

9. Display according to one or more of claims 1 to 8, **characterized in that** the switching matrix (SM) provided for activating coils (3) connected in rows and columns has coils (3) each having a hard-magnetic, axially movable core (K), so that the individual coil (3) can act both passively as a sensor via the electromagnetic induction by mechanical displacement of the hard magnetic core, and mechanically actively as an actuator by means of targeted energization of the coil (3).

10. Display according to one or more of claims 1 to 9, **characterized in that** the coils (3) are energized in rows and columns by electrically bipolar power output stages (Ta, Tb), which also have a third, high-impedance switching state (HI) and that in the case of the high-impedance switching state (HI) of the switching matrix (SM), one or more analog multiplex switches (MUXa, MUXb) are electrically connected to the column (Sp) and row lines (Za) of the switching matrix (SM), and thus make it possible to provide the differential voltage between selected column and row lines at an analog output of the multiplex switch (MUXa, MUXb).

11. Display according to one or more of claims 1 to 10, **characterized in that** the leads to the input of the analog multiplex switch (MUXa, MUXb) are each provided with a signal shaping (SF) that the induced voltage signal for further digital processing and use and that the output of the analog multiplex switch (MUXa, MUXb) is connected to a signal conditioning (SF) which conditions the induced voltage signal for further digital processing and use.

12. Display according to one or more of claims 1 to 11, **characterized in that** the signal-shaped output signal of the multiplexer (MUXa, MUXb) in a downstream control unit (CPU) can trigger an interrupt asynchronous to the clock of the control unit (CPU) and that the row and column addresses of the analog multiplex switch (MUXa, MUXb) present at the time of the asynchronous interrupt are transferred to the control unit (CPU).

13. Display according to one or more of claims 1 to 12, **characterized in that** the control unit (CPU) itself generates the row and column addresses of the analog multiplex switch (MUXa, MUXb) synchronously.

14. Use of a tactile display (54) according to one or more of claims 1 to 13 for an intuitively usable optical-tactile visual aid for substituting the human sense of sight, **characterized in that** the primary optical image information of a camera (51), which is designed as area sensor or line sensor, after undergoing a software image processing for the purpose of data reduction and image recognition, it is fed to a large-area tactile display as a display device (54), the number of tactile grid points being at least 50 x 80 = 400 and that between the camera (51) and the tactile display (54) a device for digital data processing (53) is switched, wherein the field of view of the camera (51) being divided into at least two areas, which represent the primary optical image with different tactile resolutions and wherein the image refreshment of the different tactile areas takes place at different time conditions (frequency).

15. System of optical-tactile visual aid and a tactile display (54) according to one of claims 1 to 13 and used as in claim 14, **characterized in that** the realization of the different tactile resolution optionally can take place purely software-wise via the digital control of the tactile display ( 54) with a fixed point grid or can already be specified by the geometric-mechanical arrangement of the tactile point grid of the display (54) and that in the system both the camera function and the devices for processing the optical image data (53) can be provided by a mobile phone with an integrated camera (51) and digital data processing device (53).

## Revendications

1. Afficheur tactile (54) avec une plaque à broches (12), une matrice de commutation (SM) et avec un actionneur linéaire à symétrie axiale bistable magnétiquement (A) pour des applications tactiles avec une tige magnétique dure (1), qui est en forme de plaque à une extrémité (1b) prolongée et agencée sur un circuit imprimé avec une bobine (3) dans laquelle la tige (1) est librement mobile dans la direction axiale, **caractérisé en ce que** la tige (1) de l'actionneur (A) est réalisée en un matériau avec une intensité de champ coercitif très élevée que la tige (1) est entourée axialement par un manchon magnétique dur (2) de même longueur avec une intensité de champ coercitif nettement inférieure et est librement mobile dans la direction axiale, que la course de la tige (1) est augmentée de sa surlongueur (h) par rapport à la longueur du manchon magnétique dur (2) est réglée de telle sorte qu'à une extrémité de la tige (1) un pôle auxiliaire (la) et à l'opposé un pôle principal en forme de plaque (1b) peut se former, et que le champ magnétique axial de la bobine (3), qui enferme la tige (1) et le manchon (2) ensemble, seul le matériau du manchon (2) mais pas celui de la tige (1) peut commuter dans la polarité magnétique.

2. Afficheur selon la revendication 1, **caractérisé en ce que** le pôle principal (1b) a le contour d'un cône ou d'un tronc de cône ou d'un tronc de cône à base en forme de disque dans le prolongement en forme de plaque, la hauteur (H1) de le cône ou du tronc de cône ou la hauteur (H2) de l'expansion en plaque de la tige (I) font que le champ de fuite (4, 4cd) du pôle principal en plaque (1b) ne peut plus dans la position « basse » de l'actionneur pour commuter l'aimantation du manchon (2), une extrémité du manchon magnétique dur (2) présentant un prolongement en forme de collier (2a) dont le diamètre est dimensionné en de sorte que l'extension en forme de collier (2a) touche la face d'extrémité attenante de la bobine enveloppante (3) au moins partiellement, au plus 95 % de la valeur du diamètre du pôle principal en forme de plaque (1b) du disque dur tige magnétique (1) et dans lequel le rapport desdites intensités de champ coercitif des deux matériaux magnétiques durs de la tige (1) et du manchon (2) est d'au moins 3:1.

3. Afficheur selon une ou plusieurs des revendications 1 à 2, **caractérisé en ce que** les actionneurs (A) sont disposés dans au moins deux et au plus quatre plans parallèles et décalés verticalement (13a, 13b, 13c, 13d) de l'affichage (54) et sont agencés de telle manière que les distances mutuelles latérales entre les actionneurs (A) dans un plan sont supérieures à la dimension de grille (d) spécifiée pour la plaque à broches (12).

4. Afficheur selon une ou plusieurs des revendications 1 à 3, **caractérisé en ce qu'**une broche tactile (11) a son diamètre nominal maximal uniquement dans la région des surfaces de guidage de la plaque à broches (12) et en dessous de la plaque à broches (12 ) se rétrécit en diamètre (14a, 14b, 14c, 14d) et que les plans d'actionnement (13a, 13b, 13c, 13d) sont pourvus de trous traversant étroits exactement dans la grille de la plaque à broches (12).

5. Afficheur selon une ou plusieurs des revendications 1 à 4, **caractérisé en ce qu'**avec des longueurs identiques des broches tactiles (11) avec un diamètre nominal d'au moins deux et au plus quatre types, deux à un maximum de 4 longueurs différentes par rapport au diamètre nominal de la goupille, des tiges de commande coniques peuvent être utilisées.

6. Afficheur selon l'une ou plusieurs des revendications 1 à 5, **caractérisé en ce que** les niveaux d'actionnement (13a, 13b, 13c, 13d) sont réalisés sous la forme d'une plaquette de circuit électrique ou sous la forme d'une plaquette multicouche et que l'extrémité inférieure de l'affichage (54) une ou plusieurs cartes de circuits imprimés supplémentaires avec des composants électriques (IC s) sont fixées.

7. Afficheur selon l'une ou plusieurs des revendications 1 à 6, **caractérisé en ce que**, pour un fonctionnement fiable des broches tactile mobile (11), un écran anti-poussière mécanique (25) est disposé sous le plan de la plaque à tiges (12), qui, par ombrage géométrique, minimisait la pénétration de particules de saleté (24a) à l'intérieur.

8. Afficheur selon l'une ou plusieurs des revendications 1 à 7, **caractérisé en ce que** la broche tactile (11) est solidaire à une extrémité d'une tige d'actionnement (26) dont le diamètre est au plus la moitié du diamètre de la broche tactile (11 ) et **en ce que** la fine tige d'actionnement (26) est constituée d'un matériau magnétique doux et est couplée à la face frontale (27) de l'actionneur magnétique dur (A) au moyen de forces magnétiques, moyennant quoi un réglage automatique du contact la position de la tige d'actionnement à aimant doux (26) sur la face frontale (27) de l'actionneur à aimant dur (A) se produit peu de temps avant l'accouplement.

9. Afficheur selon une ou plusieurs des revendications 1 à 8, **caractérisé en ce que** la matrice de commutation (SM) prévue pour activer des bobines (3) connectées en lignes et en colonnes comporte des bobines (3) ayant chacune un noyau magnétique dur, mobile axialement (K), de sorte que la bobine individuelle (3) peut agir à la fois passivement en tant que capteur via l'induction électromagnétique par déplacement mécanique du noyau magnétique dur, et mécaniquement activement en tant qu'actionneur au moyen d'une excitation ciblée de la bobine (3).

10. Afficheur selon l'une ou plusieurs des revendications 1 à 9, **caractérisé en ce que** les bobines (3) sont alimentées en lignes et en colonnes par des étages de sortie de puissance électriquement bipolaires (Ta, Tb), qui comportent également une troisième commutation à haute impédance (HI) et **en ce que**, dans le cas de l'état de commutation à haute impédance (HI) de la matrice de commutation (SM), un ou plusieurs commutateurs multiplex analogiques (MUXa, MUXb) sont connectés électriquement aux lignes de colonne (Sp) et de ligne (Za) de la matrice de commutation (SM), et permettent ainsi de fournir la tension différentielle entre des lignes de colonne et de ligne sélectionnées sur une sortie analogique du commutateur multiplex (MUXa, MUXb).

11. Afficheur selon l'une ou plusieurs des revendications 1 à 10, **caractérisé en ce que** les conducteurs à l'entrée du commutateur multiplex analogique (MUXa, MUXb) sont chacun pourvus d'un signal de mise en forme (SF) que le signal de tension induit pour la poursuite numérique traitement et utilisation et que la sortie du commutateur multiplex analogique (MUXa, MUXb) est connectée à un conditionnement de signal (SF) qui conditionne le signal de tension induit pour un traitement et une utilisation numérique ultérieurs.

12. Afficheur selon une ou plusieurs des revendications 1 à 11, **caractérisé en ce que** le signal de sortie en forme de signal du multiplexeur (MUXa, MUXb) dans une unité de commande aval (CPU) peut déclencher une interruption asynchrone à l'horloge de la commande (CPU) et que les adresses de ligne et de colonne du commutateur multiplex analogique (MUXa, MUXb) présent au moment de l'interruption asynchrone sont transférées à l'unité de commande (CPU).

13. Afficheur selon une ou plusieurs des revendications 1 à 12, **caractérisé en ce que** l'unité de commande (CPU) génère elle-même les adresses de ligne et de colonne du commutateur multiplex analogique (MUXa, MUXb) de manière synchrone.

14. Utilisation d'un écran tactile (54) selon une ou plusieurs des revendications 1 à 13 pour une aide visuelle optique-tactile intuitivement utilisable pour remplacer le sens de la vue humaine, **caractérisée en ce que** les informations d'image optique primaire d'une caméra (51 ), qui est conçu comme capteur de zone ou capteur de ligne, après avoir subi un traitement d'image logiciel à des fins de réduction de données et de reconnaissance d'image, il est transmis à un écran tactile de grande surface en tant que dispositif d'affichage (54), le nombre de points de grille étant au moins 50 x 80 = 400 et **en ce qu'**un dispositif de traitement de données numériques (53) est commuté entre la caméra (51) et l'affichage tactile (54), le champ de vision de la caméra (51) étant divisé en au moins deux zones, qui représentent l'image optique primaire avec des résolutions tactiles différentes et dans lequel le rafraîchissement d'image des différentes zones tactiles a lieu à des conditions temporelles (fréquence) différentes.

15. Système d'aide visuelle optique-tactile et d'affichage tactile (54) selon l'une des revendications 1 à 13 et utilisé comme dans la revendication 14, **caractérisé en ce que** la réalisation de la résolution tactile différente peut éventuellement s'effectuer de manière purement logicielle via la commande numérique de l'affichage tactile (54) avec une grille de points fixes ou peut déjà être spécifiée par la disposition géométrique-mécanique de la grille de points tactiles de l'affichage (54) et que dans le système à la fois la fonction de caméra et les dispositifs de le traitement des données d'image optiques (53) peut être assuré par un téléphone mobile avec une caméra intégrée (51) et un dispositif de traitement de données numériques (53).
